# EUROPÄISCHE PATENTSCHRIFT

(11) **EP 2 206 003 B1**
(45) Veröffentlichungstag und Bekanntmachung des Hinweises auf die Patenterteilung: **13.03.2013**
(21) Anmeldenummer: 09748203.8
(22) Anmeldetag: 27.03.2009
(51) Int. Cl.: G02B 6/00, F21V 8/00, B60Q 1/56

(54) **LICHTLEITERANORDNUNG ZUR AUSLEUCHTUNG EINES AN EINEM KFZ BEFESTIGTEN KFZ-KENNZEICHENSCHILDS UND VERFAHREN ZU DEREN HERSTELLUNG**
OPTICAL FIBER ARRANGEMENT FOR ILLUMINATING A MOTOR VEHICLE LICENSE PLATE FASTENED TO A MOTOR VEHICLE, AND METHOD FOR THE PRODUCTION THEREOF
DISPOSITIF GUIDE D'ONDE OPTIQUE DESTINÉ À ÉCLAIRER UNE PLAQUE D'IMMATRICULATION FIXÉE À UN VÉHICULE À MOTEUR, ET SON PROCÉDÉ DE RÉALISATION

(30) Priorität: 26.09.2008 DE 102008049256
(43) Veröffentlichungstag der Anmeldung: 14.07.2010
(73) Patentinhaber: Erich Utsch AG, 57080 Siegen (DE)
(72) Erfinder: BILGER, Wolfgang, 57074 Siegen (DE); WURMBACH, Lothar, 57074 Siegen (DE); PFUNDSTEIN, Bernd, 35630 Ehringshausen (DE)
(74) Vertreter: Bauer Vorberg Kayser Patentanwälte
(86) Internationale Anmeldenummer: PCT/EP2009/053693
(87) Internationale Veröffentlichungsnummer: WO 2010/034527

(56) Entgegenhaltungen:
- EP-A1- 0 878 720
- JP-A- 2004 062 139
- JP-A- 2004 317 976
- US-A- 4 285 889
- US-A- 5 779 338
- US-A1- 2006 215 958

## Beschreibung

Gegenstand der vorliegenden Erfindung ist eine Uchtleiteranordnung zur Ausleuchtung eines an einem Kfz befestigten, ggf. retroreflektierenden Kfz-Kennzeichenschilds, eine Montagevorrichtung zur Befestigung eines retroreflektierenden Kfz- Kennzeichenschilds an einem Kfz eine retroreflektierende Schildanordnung, ein Fahrzeug mit einer Haltevorrichtung für ein retroreflektierendes Kfz-Kennzeichenschilds sowie ein Verfahren zur Herstellung einer erfindungsgemäßen Lichtleiteranordnung.

Lichtleiteranordnungen zur Ausleuchtung eines an einem Kfz befestigten retroreflektierenden Kfz-Kennzeichenschilds sind aus dem Stand der Technik grundsätzlich bekannt. So offenbart beispielsweise die DE 102 58 465 A1 eine Lichtleiteranordnung, die dazu vorgesehen ist, vor einem nicht transparenten Kfz-Kennzeichenschild angeordnet zu werden, um dieses auszuleuchten. Die Lichtleiteranordnung weist einen flächenhaft ausgedehnten Lichtleiter auf, der sich im Wesentlichen parallel zur Oberfläche des auszuleuchtenden Kfz-Kennzeichenschilds erstreckt, wobei das in den Lichtleiter eingekoppelte Licht durch interne Totalreflektion im Lichtleiter geführt wird. Um Licht aus dem Lichtleiter auszukoppeln, ist eine Streuschicht auf der Oberfläche des Lichtleiters vorgesehen, welche aus zwei Materialien mit deutlich verschiedenen Brechungsindices besteht, beispielsweise aus hochbrechenden Kunststoffpartikeln in einer niedrigbrechenden Kunststoffmatrix. Die hier offenbarte Lichtleiteranordnung ist zwar grundsätzlich dazu geeignet, ein Kfz-Kennzeichenschild mit nicht transparenter Platine so auszuleuchten, dass es auch unter ungünstigen Lichtverhältnissen gut abgelesen werden kann. Sie ist aber nicht dazu geeignet, ein retroreflektierendes Kfz-Kennzeichenschilds unter Beibehaltung ausreichender Retroreflexionswerte auszuleuchten. Die Transmission der Lichtleiteranordnung liegt konstruktionsbedingt in einem relativ niedrigen Bereich, so dass ein hinter der Lichtleiteranordnung angeordnetes retroreflektierendes Kfz -Kennzeichenschild keine ausreichenden Retroreflexlonswerte mehr erzielt.

Aus der EP 1 477 368 A1 ist eine Lichtleiteranordnung zur Ausleuchtung eines an einem Kfz befestigten Kfz-Kennzeichenschilds bekannt, die dazu vorgesehen ist, ein transparentes retroreflektierendes Kfz-Kennzeichenschilds zu hinterleuchten. Im Zusammenhang mit der hier offenbarten Lichtleiteranordnung wird nicht darauf eingegangen, auf welche Weise ein Transmissionsgrad der Lichtleiteranordnung erzielt werden kann, der eine Anordnung der Lichtleiteranordnung vor dem retroreflektierenden Kfz-Kennzelchenschild erlauben würde. Dies ist aber unbedingt erforderlich, sofern es sich um ein optisch nicht transparentes Kfz-Kennzeichenschild handelt, z.B. ein Kfz-Kennzeichenschild mit einer metallischen Platine oder mit einer Platine aus einem opaken Kunststoff.

Die DE 10 2007 015 747 A1 lehrt eine Lichtleiteranordnung zur Ausleuchtung eines an einem Kfz befestigten retroreflektierenden Kfz-Kennzeichenschilds. Diese Lichtleiteranordnung weist solche Transmlsslonswerte auf, dass sie auch vor einem retroreflektierenden Kfz-Kennzeichenschild angeordnet werden kann, ohne dessen Retroreflexionswerte in unzulässiger Weise zu vermindern. Die in dieser Anmeldung offenbarten anisotropen Auskoppelstrukturen weisen aufgrund ihrer Geometrie aber Nachteile bei ihrer Herstellung auf. Eine ähnlich aufgebaute Lichtleiteranordnung offenbart auch die US 4,285,889 A.

Die US 5,779,338 A offenbart eine Lichtleiteranordnung, die zur Ausleuchtung eines LCD vorgesehen ist. Zu diesem Zweck weist die Lichtleiteranordnung, die zur Anordnung hinter dem auszuleuchtenden transparenten LCD vorgesehen ist und daher eine hellweiße rückseitige Beschichtung aufweist, vertiefte säulenartige Auskoppelstrukturen in einer der Lichtdurchtrittsflächen auf, die mit lichtstreuenden Partikeln dotiert sind. Die offenbarte Lichtleiteranordnung ist jedoch wegen der opaken rückseitigen Beschichtung sowie der niedrigen Transmission durch den Lichtleiter grundsätzlich nicht zur Ausleuchtung eines nicht transparenten Schilds geeignet.

Die US 2008/0094854 A1 offenbart schließlich einen mit anisotropen lichtstreuenden Partikeln dotierten Lichtleiter und schlägt dessen Verwendung als Diffusor in einer Beleuchtungseinrichtung für Webeschilder vor. Weiterhin wird die Aufbringung einer die Kratzfestlgkeit erhöhenden transparenten Schicht auf den Lichtleiter vorgeschlagen.

Es ist daher Aufgabe der vorliegenden Erfindung, eine Lichtleiteranordnung zur Ausleuchtung eines an einem Kfz befestigten retroreflektlerenden Kfz-Kennzeichenschild anzugeben, wobei die Lichtleiteranordnung eine solch hohe Transmission aufweist, dass sie ohne weiteres auch vor einem retroreflektierendes Kfz- Kennzeichenschild angeordnet werden kann, ohne dessen Retroreflektivität in unzulässiger Weise zu vermindern. Gleichzeitig soll eine ausreichende und insbesondere auch homogene Ausleuchtung einer Legende des Kfz-Kennzeichenschilds gewährleistet sein.

Weiterhin ist Aufgabe der vorliegenden Erfindung, eine Montagevorrichtung zur Befestigung eines retroreflektierendes Kfz-Kennzeichenschilds an einem Kfz anzugeben, welches eine homogene Ausleuchtung eines Kfz-Kennzeichenschilds mit retroreflektierender, ggf. auch optisch undurchsichtiger Platine ermöglicht, wobei gleichzeitig die Retroreflexionswerte des gehaltenen Kfz-Kennzeichenschlids nicht in unzulässiger Weise vermindert werden sollen. Weiterhin ist Aufgabe der vorliegenden Erfindung, eine beleuchte retroreflektierende Kfz - Kerinzeichenschildanordnung anzugeben, welche ein Kfz-Kennzeichenschild mit einer ausreichend hellen und homogen ausgeleuchteten Schildplatine, insbesondere Kennzeichenlegende, umfasst. Gleichzeitig soll die Schildanordnung die gesetzlich vorgeschriebenen Retroreflexionswerte erfüllen.

Weiterhin ist Aufgabe der vorliegenden Erfindung, ein Kfz mit einer Haltevorrichtung für ein retroreflektierendes Kfz-Kennzeichenschild anzugeben, wobei die Haltevorrichtung weiterhin eine Beleuchtungseinrichtung umfassen soll, die das Ausleuchten eines retroreflektierenden, ggf. optisch undurchsichtigen Kfz - Kennzeichenschilds ermöglichen soll, ohne die Retroreflexionswerte des gehaltenen Kfz-Kennzeichenschilds in unzulässiger Weise zu beeinflussen.

Schließlich ist Aufgabe der vorliegenden Erfindung, ein Verfahren zur Herstellung einer Lichtleiteranordnung zur Ausleuchtung eines an einem Kfz befestigten retroreflektierenden Kfz-Kennzeichenschilds, welches ggf. auch optisch undurchsichtig sein kann, anzugeben.

Gelöst wird diese Aufgabe durch eine Lichtleiteranordnung gemäß Anspruch 1, durch eine Montagevorrichtung gemäß Anspruch 26, durch eine beleuchtete retroreflektierende Kfz-Kennzeichenschildanordnung gemäß Anspruch 27, durch ein Kfz gemäß Anspruch 28 sowie durch ein Verfahren gemäß Anspruch 29.

Eine erfindungsgemäße Lichtleiteranordnung ist dazu vorgesehen, ein an einem Kfz befestigte retroreflektierendes Kfz-Kennzeichenschild, insbesondere ein Kfz-Kennzeichenschild mit optisch nicht transparenter, beispielsweise metallischer, Platine auszuleuchten. Die Lichtleiteranordnung weist einen flächenhaft ausgedehnten transparenten Lichtleiter mit einer frontseitigen Lichtdurchtrittsfläche und einer rückseitigen Durchtrittsfläche auf. Weiterhin ist zumindest eine Lichtquelle vorgesehen, deren Licht in den Lichtleiter eingekoppelt und in diesem geführt wird. Das im Lichtleiter geführte Licht wird zur Ausleuchtung des vor oder hinter der Lichtleiteranordnung angeordneten retroreflektierenden Kfz-Kennzeichenschilds aus diesem ausgekoppelt. Hierzu weist der Lichtleiter im Bereich einer Lichtdurchtrittsfläche angeordnete Lichtauskoppelstrukturen auf.

Erfindungsgemäß werden nun diese Lichtauskoppelstrukturen in einer Mehrzahl erhabener oder vertiefter Säulenstrukturen ausgebildet, die jeweils eine Längsachse X aufweisen. Diese Längsachse ist jeweils im Wesentlichen senkrecht zu der Lichtdurchtrittsfläche orientiert, auf der die Säulenstruktur angeordnet ist. Schließlich weisen die erfindungsgemäßen erhabenen oder vertieften Säulenstrukturen zumindest eine oder mehrere Mantelflächen auf, die im Wesentlichen senkrecht zur Lichtdurchtrittsfläche orientiert sind.

Eine solche Konfiguration der Säulenstrukturen hat sich als äußerst vorteilhaft bezüglich der erzielbaren Transmissionswerte durch den Lichtleiter erwiesen. Ein Lichtleiter, welcher mit den erfindungsgemäßen Lichtauskoppelstrukturen ausgerüstet ist, weist eine gegenüber einem Lichtleiter mit planen Lichtdurchtrittsflächen nur unwesentlich verminderte Transmission auf. Dies gilt insbesondere bei einer Einstrahlung der zu transmittierenden Strahlung in einem Winkelbereich von weniger als 45° gegenüber der Flächennormalen der Lichtdurchtrittsflächen. Dies hat unmittelbar zur Folge, dass ein hinter einem erfindungsgemäßen Lichtleiter angeordnetes retroreflektierendes Kfz-Kennzeichenschild trotz des zweifachen Lichtdurchtritts durch die Oberflächen des Lichtleiters nur eine unwesentliche Schwächung seiner Retroreflektivität erfährt.

In einer bevorzugten Ausgestaltung liegt die Höhe oder Tiefe h der Säulenstrukturen relativ zu der Lichtdurchtrittsfläche, auf der sie angeordnet sind, im Bereich zwischen 1 und 100 Mikrometern, wobei sich ein Bereich zwischen 5 und 25 Mikrometern als besonders geeignet erwiesen hat und die besten praktischen Ergebnisse mit einer Höhe oder Tiefe h erzielt wurden, die bei etwa 10 Mikrometern lag.

In einer weiteren bevorzugten Ausgestaltung weisen die erhabenen oder vertieften Säulenstrukturen eine Basisfläche A an der Lichtdurchtrittsfläche, an der sie angeordnet sind, auf, deren Größe im Bereich zwischen 50 und 50.000 Quadratmikrometern liegt. Besonders bevorzugt ist hier ein Bereich zwischen 100 und 25.000 Quadratmikrometern, wobei sich eine Größe von etwa 7.850 Quadratmikrometern besonders bewährt hat.

Die vorgenannten Lichtauskoppelstrukturen lassen sich in technisch gut beherrschbaren Prozessen herstellen. So konnten besonders gute Ergebnisse erzielt werden mit optisch hochtransparenten Lichtleitern mit einer Stärke von etwa 2,5 mm aus Polymethylmethacrylat (PMMA), in deren eine Oberfläche die erfindungsgemäßen säulenartigen Strukturen beispielsweise mittels LIGA-Technik (Lithographie, Galvanik & Abformung) eingeformt wurden. Im Rahmen der aus dem Stand der Technik gut bekannten LIGA-Technik wird mittels geeigneter lithografischer Techniken, beispielsweise mittels Röntgen- oder UV-Lithografie, eine strukturierte Maske mit einem ggf. extrem hohen Aspektverhältnis hergestellt, welche nachfolgend mittels eines galvanischen Abscheideverfahrens in eine Metallmatrize abgeformt wird. Diese Metallmatrize dient dann als Vorlage zur Abformung der Struktur in eine finale Kunststoffstruktur. Mittels der LIGA-Technik ist es also möglich, eine entsprechend strukturierte Kunststoffspritzgussform bereitzustellen, in deren eine Halbform entsprechende säulenartige erhabene oder vertiefte Master-Strukturen eingebracht sind. In einem geeigneten Kunststoffspritzgussverfahren können dann Lichtleiter beispielsweise aus PMMA oder auch aus transparentem Polycarbonat oder Polyethylen hergestellt werden, in deren eine Oberfläche dann die vorstehend genannten erhabenen oder vertieften säulenartigen Strukturen eingeformt sind. Die auf diese Weise hergestellten Lichtleiter weisen eine extrem hohe Transparenz im optischen Wellenlängenbereich auf, so dass sie ohne weiteres vor einem retroreflektierenden Kfz-Kennzeichenschild angeordnet werden können, ohne dessen Retroreflektivität unzulässig stark abzusenken. Gleichzeitig stellen die in die Lichtleiteroberfläche eingeformten säulenartigen Strukturen Streuzentren dar für das im Lichtleiter durch interne Totalreflektion geführte Licht, wobei der Lichtauskoppelgrad reproduzierbar eingestellt werden kann durch die konkrete Formgebung der säulenartigen Strukturen, durch deren Abmessungen sowie durch deren Dichte und Anordnung auf der Lichtleiteroberfläche.

Ein Parameter, mit dem der erzielbare Lichtauskoppelgrad beeinflusst werden kann, ist die Höhe oder Tiefe h der Lichtauskoppelstrukturen relativ zu der Lichtdurchtrittsfläche, auf der sie angeordnet sind. Auf besonders einfache Weise lassen sich Lichtauskoppelstrukturen erzeugen, die praktisch über die gesamte Fläche der Lichtdurchtrittsfläche des Lichtleiters im Wesentlichen eine einheitliche Höhe/Tiefe h aufweisen. Dennoch kann es unter bestimmten Umständen vorteilhaft sein, wenn die Höhe oder Tiefe h der Lichtauskoppelstrukturen lokal variiert, beispielsweise um die Ausbildung von Lichthöfen in denjenigen Bereichen des Lichtleiters, welche unmittelbar an die Lichtquellen angrenzen sind, zu unterdrücken.

Ein weiterer Parameter, der den lokal erzielbaren Lichtauskoppelgrad wesentlich beeinflusst, ist die Größe A der Basisfläche der Lichtauskoppelstrukturen. Wiederum wird in vielen Fällen die Größe A der Basisfläche der Auskoppelstrukturen praktisch über die gesamte Lichtdurchtrittsfläche, auf der die Lichtauskoppelstrukturen angeordnet sind, im Wesentlichen konstant sein. Aber auch hier kann es unter Umständen vorteilhaft sein, wenn die Größe A der Basisfläche der Lichtauskoppelstrukturen auf der Lichtdurchtrittsfläche lokal variiert, beispielsweise um die Entstehung von Lichthöfen in der Nähe der Lichtquellen zu vermeiden. Neben der Höhe oder der Tiefe h der Lichtauskoppelstrukturen bzw. der Größe A der Basisfläche der Lichtauskoppelstrukturen wird der lokal erzielbare Lichtauskoppelgrad darüber hinaus von der lokalen Dichte der Lichtauskoppelstrukturen auf der Lichtdurchtrittsfläche bestimmt. Auch hier ist es ohne weiteres möglich, die Dichte der Lichtauskoppelstrukturen auf der Lichtdurchtrittsfläche praktisch über die gesamte Fläche der Lichtdurchtrittsfläche des Lichtleiters im Wesentlichen konstant zu halten. Doch wird hier in den meisten Anwendungsfällen eine lokal variierende Dichte vorgesehen werden, da sich mittels dieser Maßnahme auf besonders einfache Weise beispielsweise die Ausbildung von Lichthöfen in der Nähe von Lichtquellen minimieren lässt. Andererseits lässt sich die entlang der Laufrichtung des im Lichtleiter geführten Lichts stetig abnehmende Lichtintensität durch eine lokale Anhebung des Lichtauskoppelgrads kompensieren, so dass man insgesamt zu einer homogenen Ausleuchtung des ausgeleuchteten Kfz-Kennzeichenschilds gelangt. Hierzu wird die Dichte der Lichtauskoppelstrukturen auf der Lichtdurchtrittsfläche lokal dergestalt variiert, dass sie in demjenigen Bereich der Lichtdurchtrittsfläche am niedrigsten ist, der an die zumindest eine Lichtquelle angrenzt. Aufgrund der Tatsache, dass die erfindungsgemäß vorzusehenden Lichtauskoppelstrukturen auch nur einen praktisch vernachlässigbaren Einfluss auf die Transmission der Lichtleiteranordnung haben, führt eine solche lokal variierende Dichte der Säulenstrukturen auch nicht zu Unregelmäßigkeiten im Retroreflexionsbild des gehaltenen Kfz-Kennzeichenschilds.
Ein weiterer Parameter, der den erzielbaren lokalen Lichtauskoppelgrad bestimmt, ist die konkrete Formgebung der erfindungsgemäß vorzusehenden Lichtauskoppelstrukturen. In einer besonders bevorzugten Ausgestaltung weisen diese einen entlang ihrer Längsachse X im Wesentlichen konstanten Querschnitt, beispielsweise einen runden Querschnitt oder einen Querschnitt in der Form eines Vielecks (3-Eck, 4-Eck, 5-Eck, 6-Eck, 7-Eck usw.) auf, so dass man im Wesentlichen säulenartige Strukturen erhält. Jedoch ist es auch möglich, Auskoppelstrukturen zu erzeugen, deren Querschnitt sich entlang ihrer Längsachse verjüngt, d.h. die säulenartigen Strukturen weisen die größte Querschnittsfläche A im Bereich der Lichtdurchtrittsfläche auf, auf der sie angeordnet sind.

Eine weitere Größe, die den lokalen Lichtauskoppelgrad beeinflusst, ist die Anordnung der Auskoppelstrukturen auf der Lichtdurchtrittsfläche relativ zueinander. Hier hat es sich bewährt, eine regelmäßige Anordnung der Lichtauskoppelstrukturen beispielsweise in Form eines hexagonalen oder quadratischen Gitters zu realisieren, da die hierzu erforderlichen LIGA-Masken auf einfachste Weise herzustellen sind. Etwas schwieriger in der Herstellung in der LIGA-Masken, aber flexibler in der Einstellung des lokal erreichbaren Lichtauskoppelgrads ist eine Anordnung der Lichtauskoppelstrukturen der Lichtdurchtrittsfläche, die im Wesentlichen stochastisch ist. Auch hier können lokale Inhomogenitäten in der Dichte der Lichtauskoppelstrukturen auf der Lichtdurchtrittsfläche vorgesehen werden dergestalt dass beispielsweise die Dichte der Lichtauskoppelstrukturen am kleinsten im denjenigen Bereich ist, der an die zumindest eine, bevorzugt aber Vielzahl von Lichtquellen angrenzt. Darüber hinaus ist auch eine stochastische Verteilung der Säulenstrukturen auf Gitterplätzen eines regelmäßigen Gitters möglich.

Werden Auskoppelstrukturen verwendet, die eine im Wesentlichen isotrope Formgebung aufweisen, d.h. als Säulenstrukturen mit konstantem oder sich verjüngendem Querschnitt ausgebildet sind, so ergibt sich in der Regel ein von der Laufrichtung L des im Lichtleiter geführten Lichts unabhängiger Lichtauskoppelgrad, was in der Praxis vorteilhaft sein kann. Wird aber ein von der Laufrichtung L abhängiger Lichtauskoppelgrad gewünscht, was unter bestimmten Umständen ebenfalls von Vorteil sein kann, so kann dieser eingestellt werden, indem die Lichtauskoppelstrukturen anisotrop ausgebildet werden. Hierzu können die Lichtauskoppelstrukturen beispielsweise quer zur Laufrichtung L des Lichts im Lichtleiter eine größere Ausdehnung aufweisen als in der Laufrichtung L.
Werden isotrope Auskoppelstrukturen benötigt, so weisen diese bevorzugt eine runde Basisfläche auf oder eine Basisfläche in Form eines regelmäßigen Vielecks. Werden hingegen anisotrop Lichtauskoppelstrukturen benötigt, so können diese beispielsweise eine elliptische Basisfläche aufweisen. Im letztgenannten Fall der anisotrope Lichtauskoppelstrukturen hat es sich als günstig erwiesen, wenn die Ausdehnung der Lichtauskoppelstrukturen quer zur Laufrichtung L des im Lichtleiter geführten Lichts zumindest um den Lichtfaktor 1,5, bevorzugt aber um den Faktor 3 und insbesondere um den Faktor 10 größer sind als die Abmessungen der Lichtauskoppelstrukturen in der Laufrichtung L. Weiterhin hat es sich bei anisotropen Lichtauskoppelstrukturen als vorteilhaft erwiesen, wenn die Laufrichtung L des im Lichtleiter geführten Lichts bei bestimmungsgemäßer Montage der Lichtleiteranordnung am Kraftfahrzeug im Wesentlichen senkrecht zur Horizontalen orientiert ist.

Vorstehend wurde bereits erwähnt, dass der Lichtleiter vorteilhaft aus einem transparenten Kunststoff hergestellt sein kann, wobei bereits auf die besondere Eignung von Polymethylmethacrylat (PMMA) hingewiesen wurde. Flächenhaft ausgedehnte Lichtleiter aus PMMA lassen sich hervorragend im Spritzgussverfahren herstellen. Sie weisen darüber hinaus eine sehr hohe optische Transparenz im sichtbaren Bereich und auf hervorragende Alterungseigenschaften unter Umwelteinflüssen auf. Weiterhin ist auch Polycarbonat grundsätzlich als Material für einen erfindungsgemäßen Lichtleiter geeignet, wobei hier beachtet werden muss, dass einerseits die erreichbare Transparenz im sichtbaren Spektralbereich geringer ist und andererseits Polycarbonat in der Regel eine weniger hohe UV-Beständigkeit aufweist. Diese kann kompensiert werden entweder durch Einbetten UV-stabilisierender Komponenten in die Polycarbonatkunststoffmatrix oder durch Aufbringen eines zusätzlichen UV-Filters, beispielsweise in Form einer separat ausgebildeten UV-Schutzscheibe oder eines UV-Schutzlacks auf die Oberfläche des Polycarbonat-Lichtleiters.

Werden Kunststoffe für die Lichtleiteranordnung verwendet, so können die Auskoppelstrukturen vorteilhaft integral mit dem Lichtleiter ausgebildet werden, beispielsweise mittels Abformen der Strukturen in den Lichtleiter bei der Herstellung des Lichtleiters im Spritzgussverfahren. Aber auch ein Einbringen der entsprechenden Lichtauskoppelstrukturen in die zumindest eine Lichtdurchtrittsfläche des Lichtleiters mittels eines Prägeverfahrens ist ohne weiteres möglich.
Wird auf die LIGA-Technik für die Herstellung der Spritzgussform für den Lichtleiter zurückgegriffen, so weisen die erzeugten Lichtauskoppelstrukturen in der Regel plane Oberflächen auf. Unter Umständen kann es aber vorteilhaft sein, die Form der planen Oberflächen zu verändern. Hierzu kann beispielsweise ein thermisch aktivierter, lokal auf die Oberflächen der Lichtauskoppelstrukturen einwirkender Umformprozess verwendet werden, der an den bereits abgeformten säulenartigen erhabenen Strukturen ausgeführt wird. Hierzu werden die höchstliegenden Bereiche der säulenartigen Strukturen kurzfristig erwärmt, wodurch die Viskosität des Kunststoffmaterials stark abnimmt, so dass ein Fließprozess in Gang kommt. Aufgrund der auf die Oberfläche des verflüssigten Kunststoffs einwirkenden Oberflächenspannung bilden die Säulenoberflächen dann kugelförmige Strukturen aus, die die optischen Eigenschaften der säulenartigen Strukturen deutlich verändern. Weitere Information zu diesem Umformverfahren können beispielsweise der DE 10 2007 015 747 A1 entnommen werden, deren Offenbarung durch diese Bezugnahme vollumfänglich zum Offenbarungsumfang der vorliegenden Anmeldung hinzugefügt wird.

Werden Lichtauskoppelstrukturen verwendet wie sie vorstehend umfänglich beschrieben wurden, so hat es sich als vorteilhaft erwiesen, wenn diese Lichtauskoppelstrukturen insgesamt einen Anteil von nicht mehr 25 % der Oberfläche derjenigen Lichtdurchtrittsfläche überdecken, in deren Bereich sie angeordnet sind. Höhere Transmissionswerte lassen sich erzielen, wenn der Anteil nicht über 10% beträgt. In praktischen Erprobungen hat sich insbesondere ein Anteil von maximal 5% als vorteilhaft herausgestellt. Sofern nicht anders angegeben bezieht sich die in Prozent angegebene Dichte der Lichtauskoppelstrukturen auf das Verhältnis der Fläche, die von der Gesamtheit der Lichtauskoppelnden Strukturen bedeckt ist, zur Gesamtgröße der Lichtdurchtrittsfläche des Lichtleiters, auf der die Lichtauskoppelnden Strukturen angeordnet sind.

In einem besonders bevorzugten Ausführungsbeispiel sind die Lichtauskoppelstrukturen als vertiefte säulenartige Strukturen mit z.B. rundem Querschnitt ausgebildet. Andere Querschnitte sind möglich. Die säulenartigen Strukturen zeichnen sich dadurch aus, dass ihre Längsachsen senkrecht zur Oberfläche des Lichtleiters orientiert sind. Weiterhin hat sich herausgestellt, dass die Transmission durch den Lichtleiter bei senkrechtem Einfall gegenüber der glatten Lichtleiteroberfläche besonders wenig gestört wird, wenn die Mantelflächen der säulenartigen Strukturen ebenfalls im Wesentlichen sich als auch ihre Mantelflächen senkrecht zur Oberfläche des Lichtleiters orientiert sind. Eine Abweichung von weniger als 15° von der Senkrechten, bevorzugt von weniger als 5° von der Senkrechten und insbesondere von weniger als 2° liefern besonders gute Ergebnisse bezüglich der Transmission durch den Lichtleiter, die für die Schwächung der Retroreflexion des dahinterliegenden auszuleuchtenden retroreflektierenden Kfz-Kennzeichenschilds von wesentlicher Bedeutung ist. Praktisch ist es von Vorteil, wenn der kleinstmögliche Neigungswinkel der Mantelfläche gegen die Senkrechte auf der Uchtleiteroberfläche eingestellt wird, der im Rahmen des für den Lichtleiter incl. der eingeformten Lichtauskoppelstrukturen praktisch realisierbar ist.

Die Tiefe dieser säulenartigen vertieften Lichtauskoppelstrukturen ist so bemessen, dass bis zu einem Anleuchtwinkel von max. 30° zur Senkrechten der Uchtleiter-/ Nummernschildoberfläche die Transmission durch den Lichtleiter möglichst wenig geschwächt wird. Bei nationalen Zulassungsverfahren wird oftmals ein Minimalwert für die Retroreflektivität eines Kfz-Kennzeichenschilds bzw. einer gesamten Kennzeichenschildanordnung definiert. Soll für das retroreflektierende Kennzeichenschild eine handelsübliche retroreflektierende Folie verwendet werden können, insbesondere eine Folie eines Typs, der auch für ein retroreflektierendes Kennzeichenschild ohne einen über der Kennzeichenlegende liegenden (reflexionsmindernden) Lichtleiter geeignet ist und daher eine nicht zu hohe Retroreflexion aufweist, so muss der Lichtleiter zwingend eine hohe Transmission aufweisen, die sich darüber hinaus im wesentlichen über den ganzen zu prüfenden Anleuchtwinkelbereich erstreckt. Im nationalen deutschen Zulassungsverfahren hat es sich für die Verwendung eines erfindungsgemäßen Lichtleiters für ein konventionelles, den Vorschriften der StVZO entsprechendes retroreflektierendes Kennzeichen als ausreichend erwiesen, wenn die Retroreflexion um nicht mehr als 30% vermindert wird. Dies bedeutet, dass die Reflexions- und Streuverluste beim einmaligen Durchgang durch den Lichtleiter für alle zu prüfenden Anleuchtwinkel nicht wesentlich über 15% betragen dürfen.

In diesem Zusammenhang hat es sich als vorteilhaft herausgestellt, wenn die säulenartigen vertieften Lichtauskoppelstrukturen eine nur verhältnismäßig geringe Tiefe aufweisen. Diese liegt für Strukturen mit einem Durchmesser im Bereich von 100 Mikrometern im Bereich von etwa 10 Mikrometern, insbesondere wenn die Strukturen eine runde, mehreckige oder elliptische Querschnittsfläche aufweisen. Für solche Strukturen ergibt sich ein ausgewogenes Verhältnis zwischen Auskoppelgrad aus dem Lichtleiter, Transmission durch den Lichtleiter und Kontrast der hinter dem Lichtleiter liegenden Kennzeichenlegende bei einem Flächenanteil der Strukturen im Bereich zwischen 5% und 20%, bevorzugt von etwa 10%.

Die vorstehend genannten Strukturen lassen sich vorteilhaft bei der Herstellung des Lichtleiters, der im Spritzgussverfahren gefertigt wird, mit einformen. Hierzu wird eine lithographisch hergestellte, vorteilhaft weiterhin mit Glanznickel beschichtete Präge- bzw. Formmaske in das zur Herstellung des Lichtleiters verwendete Spritzgusswerkzeug eingesetzt. Als besonders geeignet erwies sich der Werkstoff PMMA für den Lichtleiter wegen seiner geringen optischen Dichte und die verfügbaren Produkte mit geringer Viskosität, die für die spritzgusstechnische Herstellung des Lichtleiters vorteilhaft ist. Als bsonders geeignet hat sich der spezielle Werkstoff der Stoffklasse PMMA (Polymethylmetacrylat), der von der Firma GE Bayer Silicones unter der Bezeichnung "PMMA 8 N glasklar" vertrieben wird.

Bevorzugt sind die Lichtauskoppelstrukturen auf derjenigen Seite des Lichtleiters ausgebildet, die bei der Ausleuchtung eines Kennzeichenschilds zu diesem hin orientiert ist. Sie können aber auch in der dem Schild abgewandten Oberfläche des Lichtleiters sowie auf beiden Oberflächen des Lichtleiters - ggf. mit unterschiedlichen Dichten, Formen und Abmessungen - ausgebildet sein.

Überraschend hat es sich herausgestellt, dass sich dann besonders vorteilhafte Eigenschaften eines Lichteliters insbesondere des vorstehend beschriebenen Typs ergeben, wenn zumindest die Lichtleiteroberfläche, in der die vertieften Lichtauskoppelstrukturen eingeformt sind, mit einer hinreichend dünnen optisch transparenten Beschichtung überschichtet ist. Besondere Vorteile ergeben sich, wenn die Beschichtung im µm - Bereich eine Glättung der durch Abformung generierten vertieften Lichtauskoppelstrukturen erreicht. Auf diese Weise können unerwünschte punktartige "Spots" (d.h. unerwünscht hohe lokale Lichtauskopplungen an der Vertiefung) vermieden werden. Darüber hinaus führt die Überschichtung mit der vorgenannten Beschichtung zur einer "Anwinkelung" der vorteilhaft senkrecht zur Lichtleiteroberfläche orientierten Mantelflächen der Lichtauskoppelstrukturen, was zur Folge hat, dass vermehrt Licht aus der Lichtleiterebene zum Kennzeichen hin ausgekoppelt wird.

Diese Beschichtung kann vorteilhaft kombiniert werden mit einer Antikratzbesichtung, um den Lichtleiter für eine Anwendung im Außenbereich geeigneter zu machen. Hier hat sich das ebenfalls von der Fa. GE Bayer Silicones unter der Bezeichnung "Kratzschutzbeschichtung SHC 5020" angebotene Material besonders bewährt.

Vorteilhaft wird die erwähnte Beschichtung zumindest auf derjenigen Seite des Lichtleiters aufgebracht, in der die vertieften Lichtauskoppelstrukturen ausgebildet sind, bevorzugt aber auf beiden Seiten des Lichtleiters. Als Schichtdicke hat sich ein Dickenbereich von 1 bis 15 Mikrometern als besonders geeignet erwiesen, insbesondere von 5 bis 10 Mikronmetern. Kommt das Material SHC 5020 zum Einsatz, so hat sich eine Schichtdicke im Bereich von etwa 6 Mikrometern als besonders geeignet erwiesen.

Die Beschichtung ist besonders einfach, wenn zur Beschichtung ein flüssiges Ausgangsmaterial verwendet wird wie das Material SHC 5020. Ein solches kann auf einfachste Weise im Flutverfahren auf die Oberfläche/n des Lichtleiters aufgebracht werden. Ein Aufbringen im Sprayverfahren ist ebenfalls möglich. Eine beidseitige Beschichtung wird vorteilhaft mittels des sog. "Dip-Coatings" hergestellt.

Ggf. kann die einseitige/beidseitige Überschichtung des Lichtleiters mit der vorstehend beschriebenen Beschichtung, bei der es sich insbesondere um eine transparente Kratzschutzbeschichtung handeln kann, noch ergänzt werden zur oberseitige Aufbringung einer geeigneten Antireflexionsbeschichtung, die im stand der Technik in vielfältiger Zahl bekannt ist. Bevorzugt wird im Zusammenhang mit dem erfindungsgemäßen Lichtleiter die Aufbringung einer AR-Beschichtung im Flutverfahren oder mittels Dip-Coatings. Selbstverständlich können aber auch andere aus dem Stand der Technik bekannte Beschichtungsverfahren für das Aufbringen der AR-Beschichtung verwendet werden.

Die weiterhin von der vorliegenden Anmeldung beanspruchte beleuchtete retroreflektierende Kfz-Kennzeichenschildanordnung umfasst ein retroreflektierendes Kfz-Kennzeichenschild mit einer flächenhaft ausgedehnten Schildplatine, insbesondere einer optisch nicht transparenten Schildplatine. Insbesondere kann es sich um ein Kfz-Kennzeichenschild mit metallischer Platine handeln, welche vorderseitig mit einer retroreflektierenden Folie kaschiert ist und in die die Kennzeichenlegende in Form erhabener oder vertiefter alphanumerischer Zeichen mechanisch eingeprägt ist. Weiterhin umfasst die beleuchte retroreflektierende Kfz-Kennzeichenschildsanordnung eine erfindungsgemäße Lichtleiteranordnung gemäß des vorstehend bereits erläuterten Anspruchs 1, wobei der Lichtleiter dieser Lichtleiteranordnung bevorzugt vorderseitig der flächenhaft ausgedehnten Schildplatine angeordnet ist, um die Legende des retroreflektierenden Kfz-Kennzeichenschilds auszuleuchten.

Die weiterhin beanspruchte Montagevorrichtung ist zur Befestigung eines retroreflektierenden Kfz-Kennzeichenschilds an einem Kfz vorgesehen, wobei es sich bei einem solchen retroreflektierenden Kfz-Kennzeichenschild beispielsweise um ein heute bereits gebräuchliches Kfz-Kennzeichenschild mit metallischer Platine handeln kann, welche vorderflächig mit einer retroreflektierenden Folie kaschiert ist, wobei die Kennzeichenlegende beispielsweise in Form erhabener oder vertiefter alphanumerischer Zeichen in die metallische Platine geprägt sein kann. Die erfindungsgemäße Montagevorrichtung umfasst einen Halter, der dazu vorgesehen ist, das retroreflektierende Kfz-Kennzeichenschild mit seiner flächenhaft ausgedehnten Schildplatine zu halten, wobei der Halter weiterhin dazu vorgesehen ist, an einem Kraftfahrzeug befestigt zu werden. Dabei soll das im Halter gehaltene retroreflektierende Kfz-Kennzeichenschilds mechanisch am Kraftfahrzeug festgelegt werden. Beispielhaft hierfür wird auf die DE 20 201 853 U1 verwiesen, welche einen geeigneten Halter basierend auf einen Kunststoffmaterial offenbart. Aber auch aus der DE 10 2005 035 232 A1 ist ein Halter für ein Kfz-Kennzeichenschild bekannt, welcher insbesondere geeignet ist, neben einem retroreflektierenden Kfz-Kennzeichen-Schild mit beispielsweise metallischer Platine auch noch einen Lichtleiter in sich aufzunehmen, der vorderseitig der Kennzeichenplatine angeordnet ist. Die Montagevorrichtung umfasst weiterhin eine Lichtleiteranordnung gemäß des vorstehend bereits ausführlich diskutierten Anspruchs 1. Auch der Offenbarungsgehalt der DE 10 2005 035 232 A1 wird durch diese Bezugnahme vollumfänglich zur Offenbarung der vorliegenden Anmeldung hinzugefügt.

Weiterhin wird Schutz beansprucht für ein Kraftfahrzeug mit einer beleuchteten Haltevorrichtung für ein retroreflektierendes Kfz-Kennzeichenschild, wobei die Haltevorrichtung eine Kennzeichenschildaufnahme umfasst, die dazu ausgebildet ist, ein retroreflektierenden Kfz-Kennzeichenschild mit einer flächenhaft ausgedehnten, beispielsweise metallischen, Schildplatine zu halten. Dabei legt die Kennzeichenschildaufnahme das retroreflektierende Kfz-Kennzeichenschild mechanisch am Kraftfahrzeug fest. Weiterhin umfasst die am Kraftfahrzeug vorgesehene Haltevorrichtung eine Lichtleiteranordnung gemäß des vorstehend bereits ausführlich diskutierten Anspruchs 1, wobei der Lichtleiter der Lichtleiteranordnung bei in der Kennzeichenschildaufnahme gehaltenem retroreflektierenden Kfz-Kennzeichenschild vorderseitig der flächenhaft ausgedehnten Schildplatine des retroreflektierenden Kfz-Kennzeichenschilds angeordnet ist.

Das Verfahren, welches weiterhin Gegenstand der vorliegenden Erfindung ist, dient zur Herstellung einer Lichtleiteranordnung zur Ausleuchtung eines an einem Kfz befestigten, ggf. retroreflektierenden Kfz-Kennzeichenschilds. Es weist zumindest die folgenden Verfahrensschritte auf:
1. Bereitstellen zumindest einer Lichtquelle
2. Bereitstellen eines flächenhaft ausgedehnten transparenten Lichtleiters mit einer frontseitigen Lichtdurchtrittsfläche und einer rückseitigen Durchtrittsfläche, wobei der Lichtleiter im Bereich einer Lichtdurchtrittsfläche angeordnete Lichtauskoppelstrukturen aufweist, die aus einer Mehrzahl erhabener oder vertiefter Säulenstrukturen bestehen, die folgende Merkmale aufweisen:
   a. eine Längsachse X, die im Wesentlichen senkrecht zur Lichtdurchtrittsfläche orientiert ist, und
   b. eine oder mehrere Mantelflächen, die ebenfalls im Wesentlichen senkrecht zur Lichtdurchtrittsfläche orientiert sind.
3. Herstellen einer optischen Verbindung zwischen der Lichtquelle und dem flächenhaft ausgedehnten Lichtleiter, dergestalt, dass das von der Lichtquelle ausgesandte Licht in den Lichtleiter eingekoppelt und in diesem über interne Totalreflexion geführt wird.

Bezüglich weiterer vorteilhafter Merkmale der auf der Lichtdurchtrittsfläche angeordneten Lichtauskoppelstrukturen wird auf die Ausführungen im Zusammenhang mit dem Anspruch 1 verwiesen. Besondere Vorteile ergeben sich, wenn zum Bereitstellen eines Lichtleiters mit den geforderten Merkmalen ein solcher Lichtleiter in einem Spritzgussverfahren hergestellt wird, wobei vorteilhaft die erfindungsgemäß vorzusehenden Lichtauskoppelstrukturen im Rahmen dieses Spritzgussverfahrens direkt in eine Lichtdurchtrittsfläche des hergestellten Lichtleiters eingeformt werden.

Im Rahmen einer alternativen Verfahrensführung wird bei dem Bereitstellen des flächenhaft ausgedehnten transparenten Lichtleiters mit den geforderten Merkmalen in einem ersten Verfahrensschritt ein Lichtleiterrohling beispielsweise mittels Strangextrusion oder Spritzguss hergestellt. In einem nachfolgenden Verfahrensschritt wird dann in zumindest eine Lichtdurchtrittsfläche des Lichtleiterrohlings die erfindungsgemäß vorzusehenden Lichtauskoppelstrukturen eingebracht durch mechanisches Prägen des Lichtleiterrohlings, z.B. durch Abwalzen der Lichtdurchtrittsfläche des Lichtleiterrohlings mit einer geeignet strukturierten Walze.

Weitere Vorteile und Merkmale der erfindungsgemäßen Lichtleiteranordnung, der erfindungsgemäßen Montagevorrichtung, der erfindungsgemäßen beleuchten retroreflektierenden Kfz-Kennzeichenschildanordnung, des Kfz mit einer beleuchteten Haltevorrichtung für ein retroreflektierendes Kfz-Kennzeichenschild sowie des erfindungsgemäßen Verfahrens zur Herstellung einer Lichtleiteranordnung ergeben sich aus den Unteransprüchen sowie den nachfolgend diskutierten Ausführungsbeispielen, die anhand der Zeichnung näher erläutert werden:

In dieser zeigen:
- Fig. 1:: eine perspektivische Teilschnittansicht einer Montagevorrichtung zur Befestigung eines retroreflektierenden Kfz-Kennzeichenschilds an einem Kfz gemäß dem Stand der Technik,
- Fig. 2:: eine vergrößerte Ansicht eines Schnitts durch die Montagevorrichtung gemäß dem Stand der Technik aus Figur 1,
- Fig. 3:: eine vergrößerte Teilschnittansicht des Lichtleiters der Montagevorrichtung gemäß dem Stand der Technik aus Figur 1,
- Fig. 4:: eine Aufsicht auf den Lichtleiter eines ersten Ausführungsbeispiels einer erfindungsgemäßen Lichtleiteranordnung,
- Fig. 5:: eine vergrößerte Darstellung eines Dämpfungsbereichs des Lichtleiters aus Figur 4,
- Fig. 6:: eine schematische Darstellung der Anordnung der erfindungsgemäßen Lichtleiterauskoppelstrukturen auf einer Lichtdurchtrittsfläche des Lichtleiters gemäß Figur 4,
- Fig. 7:: eine elektronenmikroskopische Darstellung einer Lichtdurchtrittsfläche des Lichtleiters gemäß Figur 4, und
- Fig. 8:: eine elektronenmikroskopische Aufnahme einer Lichtdurchtrittsfläche eines Lichtleiters einer weiteren erfindungsgemäßen Lichtleiteranordnung.

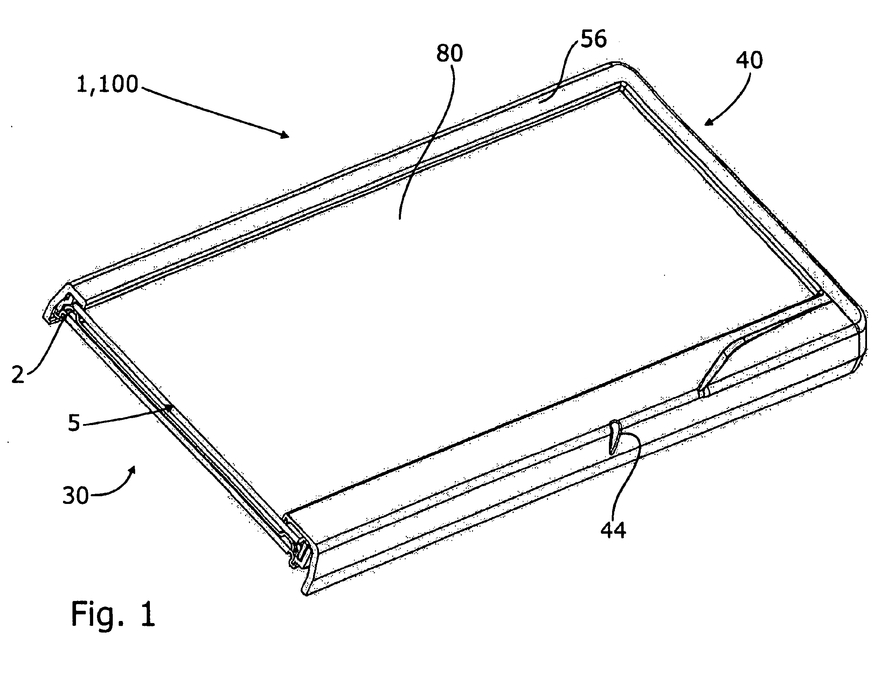

Die Figuren 1 bis 3 beziehen sich auf eine Montagevorrichtung, die aus dem Stand der Technik vorbekannt sind. Sie sind der deutschen Patentanmeldung DE 10 2007 015 747.0 derselben Anmelderin entnommen, wobei durch diese Bezugnahme der gesamte Offenbarungsumfang der in Bezug genommenen älteren Patentanmeldung zum Offenbarungsumfang der vorliegenden Anmeldung hinzugefügt wird.

Die aus dem vorgenannten Stand der Technik bekannte Montagevorrichtung 1 umfasst einen Halter 10, der dazu ausgebildet ist das Kfz -Kennzeichenschild 2 zu halten. Der Halter 10 ist weiterhin dazu ausgebildet, an einem Kfz (nicht gezeigt) befestigt zu werden, dergestalt dass das vom Halter 10 gehaltene retroreflektierende Kfz -Kennzeichenschild 2 mechanisch am Kfz festgelegt wird.

Im gezeigten Ausführungsbeispiel umfasst der Halter 10 eine unterseitige Montageplatte 30, die beispielsweise im Spritzgussverfahren aus einem schlagzähen Thermoplast wie ABS hergestellt werden kann. Mit der rückwärtigen Montageplatte 30, die zur Montage an einem Kfz vorgesehen ist, ist oberseitig eine Kennzeichenschildeinheit 40 verbunden, die unverlierbar mit der Montageplatte 30 verbunden ist, wobei die Verbindung zwischen der Montageplatte 30 und der Kennzeichenschildeinheit 40 mittels eines geeigneten Werkzeugs beschädigungsfrei gelöst werden kann.

Der Halter 10 der Montagevorrichtung 1 besteht also aus der Montageplatte 30 und der Kennzeichenschildeinheit 40. Innerhalb der Kennzeichenschildeinheit 40, welche ein geschlossenes Gehäuse ausbildet, ist ein Kennzeichenschild 2 gehaltert.

Weiterhin umfasst die Montagevorrichtung 1 eine erfindungsgemäße Lichtleiteranordnung 5, auf die im Folgenden noch genauer eingegangen wird. Der Lichtleiter 80 der Lichtleiteranordnung 5 ist bei gehaltenem retroreflektierenden Kfz -Kennzeichenschild 2 vorderseitig der flächenhaft ausgedehnten Schildplatine des retroreflektierenden Kfz -Kennzeichenschilds 2 angeordnet ist. Dabei ist die Lichtleiteranordnung 5 vollständig innerhalb des geschlossenen Gehäuses der Kennzeichenschildeinheit 40 angeordnet.

Dieses Gehäuse wird dabei oberhalb des gehalterten Kfz-Kennzeichenschilds 2 von dem oberseitig angeordneten flächenhaft ausgedehnten Lichtleiter 80 der Lichtleitereinheit 5 abgedeckt, welcher mittels Verkleben oder Verschweißen mit der vorderseitigen Blende 56, die Teil eines Rahmens 50 der Kennzeichenschildeinheit 40 ist, verbunden ist. Die vorderseitige Blende 56 besteht ebenfalls aus einem schlagzähen thermoplastischen Kunststoff wie ABS und kann beispielsweise mittels Spritzguss gefertigt werden. Der Lichtleiter 80 besteht aus einem transparenten schlagzähen Kunststoff. Bevorzugt kommt hier aufgrund der hohen Transparenz und der hohen mechanischen Belastbarkeit PMMA zum Einsatz. Denkbar ist jedoch auch die Verwendung von anderen transparenten Kunststoffen wie beispielsweise Polycarbonat oder Polyethylen.

Zusätzlich kann die frontseitige Lichtdurchtrittsfläche 81 des Lichtleiters 80 durch Aufbringung einer harten und ggf. auch entspiegelnd wirkenden dünnen Schicht hartvergütet sein, wodurch die Kratzfestigkeit des Lichtleiters 80 erhöht und gleichzeitig seine Reflektivität herabgesetzt werden kann, was die Lesbarkeit der Kennzeichenlegende des darunter liegenden Kfz-Kennzeichenschild deutlich erhöht.

Weiterhin sind in der vorderseitigen Blende 56 des Rahmens 50 Montageöffnungen 44 vorgesehen, die eine Einführung von Werkzeug erlauben und auf diese Weise eine Trennung von rückseitiger Montageplatte 30 und vorderseitiger Kennzeichenschildeinheit 40 erlauben.

Die Verwendung einer Montagevorrichtung 1, deren Halter 10 als Kennzeichenschildeinheit 40 mit einem geschlossenen Gehäuse ausgebildet ist, welche mit einer für eine Montage am Kfz vorgesehenen Montageplatte 30 verbindbar ist, ist optional und für die Realisierung der erfindungsgemäßen Vorteile nicht zwingend erforderlich. Auch die Verwendung einer Vergütung der frontseitigen Lichtdurchtrittsfläche 81 des Lichtleiters 80 ist optional.

Die Lichtleiteranordnung 5 der dargestellten Montagevorrichtung 1 bildet gemeinsam mit dem in der Kennzeichenschildeinheit 40 angeordneten retroreflektierenden Kfz-Kennzeichenschild 2 eine erfindungsgemäße beleuchtbare Kfz-Kennzeichenschildanordnung 100 aus.

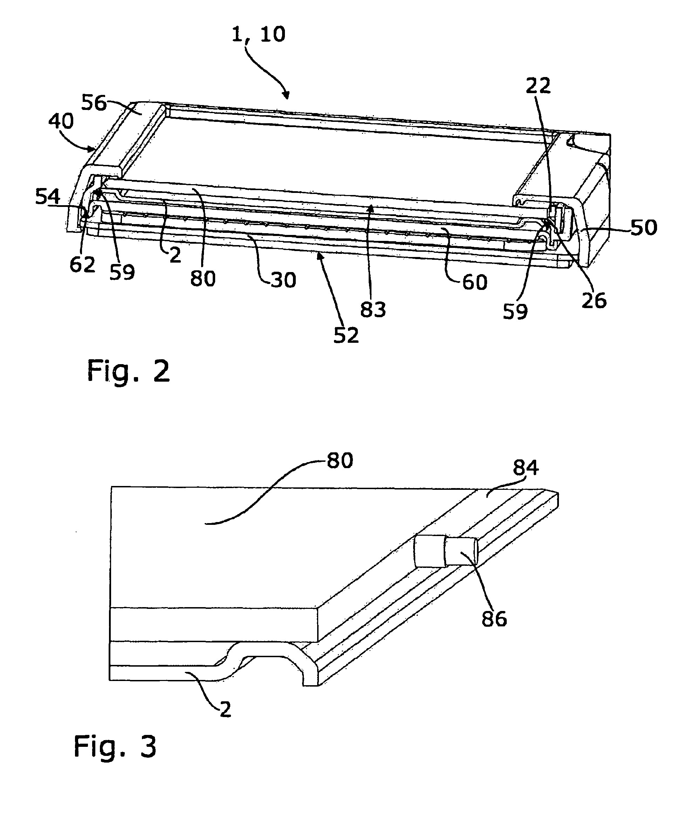

Figur 2 zeigt nun vergrößert einen Schnitt durch die aus Figur 1 ersichtliche erfindungsgemäße Montagevorrichtung 1, aus dem deren Aufbau genauer ersichtlich wird. Der Halter 10 umfasst die rückwärtige Montageplatte 30, welche unverlierbar, aber lösbar, mit der oberseitig angeordneten Kennzeichenschildeinheit 40 verbunden ist.

Die Kennzeichenschildeinheit 40 bildet ein geschlossenes Gehäuse aus, in welchem eine Beleuchtungseinrichtung 20 sowie das zu haltende bzw. zu beleuchtende Kfz-Kennzeichenschild 2 angeordnet ist. Bei dem zu haltenden Kfz-Kennzeichenschild 2 handelt es sich vorzugsweise um ein Kfz-Kennzeichenschild mit metallischer Platine, insbesondere mit geprägter metallischer Platine, bei welchem die Legende in Form erhaben geprägter Ziffern eingebracht ist. Die Beleuchtungseinrichtung 20 umfasst eine Mehrzahl von Lichtquellen 22, welche von einem gemeinsamen Lichtquellenträger 26 getragen werden und gleichmäßig beabstandet angeordnet sind. Bei den Lichtquellen 22 handelt es sich bevorzugt um Weißlicht-Leuchtdioden (LED) der SMD-Bauform (surface mounted device), welche mit einer niedrigen Betriebsspannung arbeiten und eine hohe optische Ausgangsleistung aufweisen. Diese sind gegenwärtig von einer Mehrzahl von Anbietern erhältlich und weisen den Vorteil einer homogenen Strahlungscharakteristik bei einer hohen Lebensdauer auf. Der hohe Wirkungsgrad von LED führt darüber hinaus zu einer nur geringen Wärmeentwicklung.

Beispielhaft werden hier weiße Hochleistungs-LED genannt, die eine Lichtleistung von 1000 mcd und darüber aufweisen. Die Fa. Oshino Lamps GmbH, Nürnberg, Deutschland, bietet unter der Produktbezeichnung SUW 30030 weiße Hochleistungs-LED an, die eine Lichtleistung von typ. 4000 mcd bei einem Abstrahlwinkel von 30° aufweisen. Auch die Fa. Candel Lights bietet vergleichbare Hochleistungs-LEDs an, die jeweils eine Lichtleistung von ca. 1300 mcd bei einer el. Leistung von ca. 2,7 W aufweisen. Vorteilhaft werden die LEDs z.B. auf einer eine Lichtleiste ausbildenden Platine montiert. Es hat sich bewährt, zusätzlkich einen Bewitterungsschutz in Form eines flüssigen Coatings auf die LEDs aufzubringen, z.B. in Form einer etwa 10 Mikrometer dicken Schicht aus Parylene, welches von der Fa. Teutonia angeboten wird. Auch die Aufbringung eines zusätzlichen Korrosionsschutzes auf den Lötstellen der LEDs auf der Platine der Lichtleiste wie z.B. des Korrosionsschutzmittels Terostat MS 931 der Fa. Henkel hat sich bewährt.

Die Verwendung von bis zu 20 LED der genannten Typen führt im Zusammenhang mit dem Halter 10 bzw. der Montagevorrichtung 100 des dargestellten Ausführungsbeispiels zu guten Ergebnissen. Werden LEDs vom SMD-Typ verwendet, so hat sich die Verwendung von LEDs bewährt, die von der Fa. Alder Deutschland GmbH, Talstr. 55, 71522 Backnang unter der Produktbezeichnung AS-1311 WCA2-C2Z vertrieben werden.

Die Mehrzahl der Lichtquellen 22 der Beleuchtungseinrichtung 20 ist dabei in einer Längsseite der Kennzeichenschildeinheit 40 angeordnet, wobei die Strahlrichtung der einzelnen Lichtquellen 22 mit der Ebene des Kfz-Kennzeichenschilds 2 zusammenfällt.

Die Lichtquellen 22 werden über eine gemeinsame Versorgungsleitung mit elektrischer Energie versorgt, wobei die hier nicht dargestellte Versorgungsleitung über eine abgedichtete Bohrung aus der Kennzeichenschildeinheit 40 herausgeführt wird.

Zur gleichmäßigen Ausleuchtung des gehaltenen Kfz-Kennzeichenschilds 2 ist oberseitig des Kfz-Kennzeichenschilds 2 ein flächenhaft ausgedehnter Lichtleiter 80 angeordnet, welcher Teil einer erfindungsgemäßen Lichtleiteranordnung 5 ist. Dabei ist der Lichtleiter 80 durch den geprägten erhabenen Rand des Kfz-Kennzeichenschilds 2 beabstandet von der Platine des Kfz-Kennzeichenschilds 2 angeordnet. In diesen Lichtleiter 80, welcher vorzugsweise aus einem transparenten Kunststoff wie beispielsweise Polycarbonat oder PMMA besteht, wird das von den Lichtquellen 22 ausgesandte Licht auf geeignete Weise eingekoppelt. Auch hierauf wird im Folgenden noch genauer eingegangen. Im Lichtleiter 80 wird das eingekoppelte Licht der Lichtquellen 22 durch innere Totalreflexion geführt.

Dabei ist die (Oberflächen-)Beschaffenheit des Lichtleiters 80 im Bereich seiner rückseitigen Lichtdurchtrittsfläche 83 so beschaffen, dass bei jeder internen Totalreflexion durch gezielt in den Lichtleiter 80 eingebrachte Lichtauskoppelstrukturen 90 ein geringer Prozentsatz der einfallenden Strahlung ausgekoppelt und auf das darunter liegende Kfz-Kennzeichenschild 2 gelenkt wird, so dass dieses ausgeleuchtet wird. Auf diese Lichtauskoppelstrukturen 90 wird im Folgenden ebenfalls noch genauer eingegangen werden. Vorab sei erwähnt, dass durch gezielte Strukturierung der Oberfläche 83 des Lichtleiters 80 in den an die Lichtquellen 22 angrenzenden Bereichen die im Bereich der Lichtquellen 22 stark erhöhte Intensität im Lichtleiter 80 ausgeglichen werden kann, indem dort der Auskoppelgrad lokal deutlich abgesenkt wird. Grundsätzlich ist aber auch möglich, auf eine inhomogene Ausgestaltung des Auskoppelgrads zu verzichten und den Auskoppelgrad über die gesamte Fläche des Lichtleiters im Wesentlichen homogen einzustellen, solange die geltenden Vorschriften der ECE-4 TA 22 sowie TA 22a bezüglich der Homogenität der Ausleuchtung des Kennzeichens erfüllt werden.

Das Gehäuse der Kennzeichenschildeinheit 40 wird im gezeigten Ausführungsbeispiel aus mehreren Komponenten gebildet. Ein Rahmen 50, welcher eine vorderseitige Blende 56 sowie einen rückseitigen Halter 58 umfasst, die als separate Teile gefertigt werden und im Rahmen der Erstellung des erfindungsgemäßen Halters 1 unlösbar miteinander verbunden werden, beispielsweise mittels Verschweißung, weisen eine vorderseitige Öffnung aus, in die der flächenhaft ausgedehnte Lichtleiter 80 eingesetzt ist. Der Lichtleiter 80 ist dabei wie bereits erwähnt, unlösbar mit der vorderseitigen Blende 56 des Rahmens 50 verbunden, beispielsweise mittels Verklebung. Im gezeigten Ausführungsbeispiel sind die vorderseitige Blende 56 sowie der rückseitige Halter 58 jeweils mittels Tiefziehverfahren oder Spritzgussverfahren hergestellt und bestehen jeweils aus einem schlagzähen thermoplastischen Kunststoff wie beispielsweise ABS.

Der Rahmen 50 der Kennzeichenschildeinheit 40 weist rückseitig eine Zutrittsöffnung 52 auf, die sich über die gesamte rückwärtige Fläche des Rahmens 50 erstreckt und deren Abmessungen so bemessen sind, dass durch die Zutrittsöffnung 52 das zu haltende retroreflektierende Kfz-Kennzeichenschild 2 in den Rahmen 50 eingelegt werden kann. Wird das Kfz-Kennzeichenschild eingelegt, so gelangt es in Kontakt mit Andruckflächen 59, welche im rückseitigen Halter 58 ausgebildet sind, sowie mit der rückseitigen Lichtdurchtrittsfläche 83 des Lichtleiters 80, wodurch sich eine mechanische Abstützung ausbildet.

Nachdem das Kfz-Kennzeichenschild 2 in den Rahmen 50 eingelegt wurde, wird die Kennzeichenschildeinheit 40 mittels eines Deckels 60 hermetisch verschlossen. Hierzu weist der Rahmen 50 rückseitig eine umlaufende Dichtleiste 54 auf. Gleichzeitig bildet der Deckel 60 eine umlaufende Aufnahmenut 62 aus, welche in ihrer Formgebung komplementär zur umlaufenden Dichtleiste 54 ausgebildet ist. Das Material des Deckels 60 weist nun eine gegenüber dem Material des Rahmens 50 erhöhte Elastizität auf, wobei die Abmessungen des Deckels 60, hier insbesondere der umlaufenden Aufnahmenut 62, so bemessen sind, dass der Deckel 60 mit seiner umlaufenden Aufnahmenut 62 auf die Dichtleiste 54 des rückseitigen Halters 58 aufgezogen werden kann. Hierbei erfährt der Deckel 60 eine gewisse elastische Dehnung, wodurch der Deckel 60 auf der umlaufenden Dichtleiste 54 festgelegt wird. Als Material für den Deckel 60 haben sich thermoplastische Polyurethane, beispielsweise das von der Firma Bayer Materialscience AG unter der Marke Desmopan® vertriebene thermoplastische aliphatische Polyurethan bewährt. Dieses weist gegenüber ABS eine erhöhte Elastizität auf, so dass der Deckel 60 in der von Kunststoffboxen aus dem Lebensmittelbereich bekannten Art und Weise auf die Dichtleiste 54 des Rahmens 50 aufgezogen werden kann, wobei sich ein abdichtender Sitz der Dichtleiste 54 in der Aufnahmenut 62 ergibt. Hierdurch wird das von der Kennzeichenschildeinheit 40 ausgebildete Gehäuse 10 durch den Deckel 60 abgedichtet verschlossen.

Wie aus Figur 3 ersichtlich ist bildet der Lichtleiter 80 an seinen Längsseiten zapfenförmige Befestigungsarme 86 aus. Diese Befestigungsarme 86 sind durch Durchgangslöcher im Lichtquellenträger 26 hindurchgeführt und mit diesem durch thermisches Verstemmen unlösbar verbunden. Zum Zusammenfügen des Rahmens 50 wird der Lichtleiter 80 daher in einem ersten Schritt unverlierbar mit dem Lichtquellenträger 26 der Beleuchtungseinrichtung 20 verbunden, auf der die Mehrzahl von Lichtquellen 22 angeordnet ist. Danach wird diese fertig konfektionierte Lichtleiteranordnung 5 dann in die vorderseitige Blende 56 eingesetzt. Nachfolgend wird auf die Rückseite der vorderseitigen Blende 56 der rückseitige Halter 58 aufgesetzt und mit der vorderseitigen Blende 56 verschweißt. Hierdurch wird die Lichtleiteranordnung 5 nochmals im Rahmen 50 festgelegt, insbesondere unverlierbar mit diesem verbunden.

Wie weiterhin aus Figur 3 ersichtlich ist bildet der Lichtleiter 80 randseitig eine plane Einkoppelfläche 84 aus, in die das von den im gezeigten Ausführungsbeispiel als SMD-LEDs ausgebildeten Lichtquellen 22 emittierte Licht eingekoppelt wird. Hierzu werden die planen Lichtemissionsflächen der SMD-LEDs bei der Montage des Lichtleiters 80 an der Beleuchtungseinrichtung in mechanischen Kontakt mit der Einkoppelfläche 84 gebracht. Eine optische Ankopplung der LEDs an den Lichtleiter z.B. durch Ausfüllen des verbleibenden Luftspalts zwischen den Lichtemissionsflächen der SMD-LEDs und der Lichteinkoppelfläche 84 mit einem Klebstoff, dessen Brechungsindex auf den Brechungsindex des Lichtleiters 80 sowie der SMD-LEDs abgestimmt ist, kann vorteilhaft sein, ist aber nicht zwingend erforderlich.

Weiterhin ist die Geometrie des Rahmens 50, insbesondere des Lichtleiters 80, so bemessen, dass bei zusammengefügtem Rahmen 50 ein Luftspalt zwischen der vorderseitigen Schutzscheibe 70 und dem Lichtleiter 80 verbleibt, so dass eine Auskopplung des im Lichtleiter 80 geführten Lichts durch eine Einkopplung in die Schutzscheibe 70 möglichst vermieden wird (vgl. Fig. 2). Indem eine separate Schutzscheibe 70 vorgesehen wird, welche selbst nicht als Lichtleiter der Beleuchtungseinrichtung 20 fungiert, kann eine unerwünschte verstärkte Auskopplung von Licht aus dem Lichtleiter 80 aufgrund von mechanischen Beschädigungen der vorderseitigen Lichtaustrittsfläche des erfindungsgemäßen Halters 1 weitgehend vermieden werden. Die Anordnung einer Schutzscheibe 70 vor dem Lichtleiter 80 ist als optional anzusehen. Aus Kostengründen und wegen einer höheren Retroreflexion der gesamten Kennzeichenschildeinheit 40 ist eine zumindest frontseitige Vergütung des Lichtleiters 80 mit einer Kratzfestigkeitserhöhenden Schicht vorzuziehen.

Ist das zu haltende Kennzeichenschild 2 rückseitig in die Kennzeichenschildeinheit 40 durch die in der Kennzeichenschildeinheit 40 ausgebildete Zutrittsöffnung 52 eingelegt, die sich im gezeigten Ausführungsbeispiel praktisch über die gesamte rückwärtige Fläche des rückseitigen Halters 58 erstreckt, so wird die Zutrittsöffnung 52 des Rahmens 50 mittels eines Deckels 60 hermetisch verschlossen. Hierzu bildet der rückseitige Halter 58, wie bereits erwähnt, eine umlaufende Dichtleiste 54 aus. Weiterhin bildet der Deckel 60 eine umlaufende Aufnahmenut 62 aus. Die Formgebung der Dichtleiste 54 und der Aufnahmenut 62 sind dabei so aneinander angepasst, dass sich ein Formschluss zwischen Dichtleiste 54 und Aufnahmenut 62 ergibt, wenn der Deckel 60 rückseitig auf den Rahmen 50 aufgesetzt wird.

Nach Zusammenfügen der vorstehend beschriebenen Komponenten ist die Kennzeichenschildeinheit 40 der erfindungsgemäßen Montagevorrichtung 1 betriebsbereit. Die fertig gestellte Kennzeichenschildeinheit 40 mit eingesetztem Kfz-Kennzeichen 2 kann nunmehr mit der (beispielsweise mittels Verschraubung fest mit einem Kfz verbundenen) Montageplatte 30 verbunden werden, die mechanisch an einem Kfz festgelegt ist, z.B. durch Verschrauben.

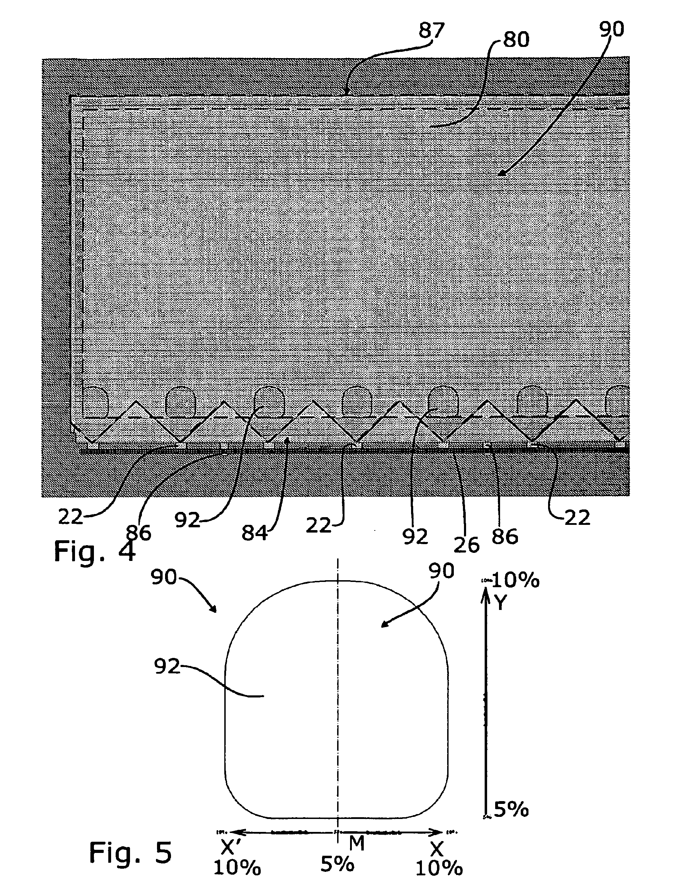

Figur 4 zeigt nun in Aufsicht den Lichtleiter 80 einer erfindungsgemäßen Lichtleiteranordnung, wobei an der Einkoppelfläche 84 des Lichtleiters 80 eine Mehrzahl von Lichtquellen 22 angeordnet ist, die von einem gemeinschaftlichen Lichtquellenträger 26 getragen werden. Das von den Lichtquellen 22 ausgesandte Licht wird dabei so in die Einkoppelfläche 84 des Lichtleiters 80 eingekoppelt, dass ein hoher Prozentsatz der von den Lichtquellen 22 ausgesandten Lichts tatsächlich innerhalb des Lichtleiters 80 propagiert und dort durch interne Totalreflektion geführt wird. Details hierzu lassen sich nochmals der in Bezug genommenen DE 10 2007 015 747 entnehmen.

Von zentraler Bedeutung für die vorteilhaften Eigenschaften der erfindungsgemäßen Lichtleiteranordnung sind nun die säulenartigen Lichtauskoppelstrukturen 90, die in der rückseitigen Lichtdurchtrittsfläche 83 des Lichtleiters 80 angeordnet sind, d.h. in derjenigen Lichtdurchtrittsfläche, welche bei einer bestimmungsgemäßen Benutzung der erfindungsgemäßen Lichtleiteranordnung 5 angrenzend an das auszuleuchtende Kfz-Kennzeichenschild 2 angeordnet.

In der Figur 4 ist langgestrichelt angedeutet derjenige Bereich des Lichtleiters 80, welcher bei einer Anordnung des Lichtleiters 80 in der erfindungsgemäßen Montagevorrichtung 1 nicht vom Rahmen 50 des Halters 10 überdeckt ist. Kurzgestrichelt ist derjenige Bereich des Lichtleiters 80, der vom Licht erfasst wird, welches von den Lichtquellen 22 ausgesandt wird.

Weiterhin ist aus Figur 4 ersichtlich, dass auf der rückseitigen Lichtdurchtrittstläche 83 den Lichtquellen 22 unmittelbar gegenüberliegend Dämpfungsbereiche 92 ausgebildet sind, in denen die Dichte der erfindungsgemäßen säulenartigen Lichtauskoppelstrukturen 90 lokal abgesenkt ist, wie in Figur 5 genauer dargestellt ist. Grundsätzlich ist im gezeigten Ausführungsbeispiel die Dichte der lichtauskoppelnden Strukturen 90 in der rückseitigen Lichtdurchtrittsfläche 83 so gewählt, dass 10% der rückseitigen Lichtdurchtrittsfläche 83 von den erfindungsgemäßen säulenartigen Lichtauskoppelstrukturen 90 bedeckt sind. Dabei handelt es sich praktisch über die gesamte Fläche des Lichtleiters hinweg um eine regelmäßige Anordnung der Lichtauskoppelstrukturen 90. In den Dämpfungsbereichen 22 hingegen ist lokal die Dichte der Lichtaustrittskoppelstrukturen 90 gegenüber den umliegenden Bereichen der rückseitigen Lichtdurchtrittsfläche 83 von 10% auf maximal 5% abgesenkt. Das heißt, in den Dämpfungsbereichen 92 sind lokal nur 5% der Lichtleiteroberfiläche mit den erfindungsgemäßen Lichtauskoppelstrukturen bedeckt. Dabei erhöht sich die lokale Dichte der Lichtauskoppelstrukturen 90 ausgehend von der Symmetrielinie M kontinuierlich von 5% auf der Linie M bis zu 10% am Rand des Dämpfungsbereichs 92 sowohl in der mit X gekennzeichneten Richtung als auch in der mit X' gekennzeichneten Gegenrichtung. In der mit Y gekennzeichneten Laufrichtung L des in den Lichtleiter 80 eingekoppelten Lichts erhöht sich lokal die Dichte der Lichtauskoppelstrukturen 90 ausgehend von derjenigen Kante des Dämpfungsbereichs 92, welcher angrenzend an die nächstliegende Lichtquelle 22 orientiert ist, von dort 5% auf 10% am gegenüber liegenden Ende des Dämpfungsbereichs 92. Die Dichteangaben beziehen sich hier auf eine kubische Gitterstruktur mit kreisförmigen Strukturen 90, wobei sich randseitig berührende Strukturen 90 einer Dichte von 100 % entsprechen. Durch Einführung dieser Dämpfungsbereiche 92 in der unmittelbaren Umgebung der Lichtquellen 22 bzw. deren Einkoppelpunkten in den Lichtleiter 80 kann die Ausbildung von die Lesbarkeit des Kennzeichenschilds negativ beeinflussenden Lichthöfen im Bereich der Lichtquellen 22 unterdrückt werden.

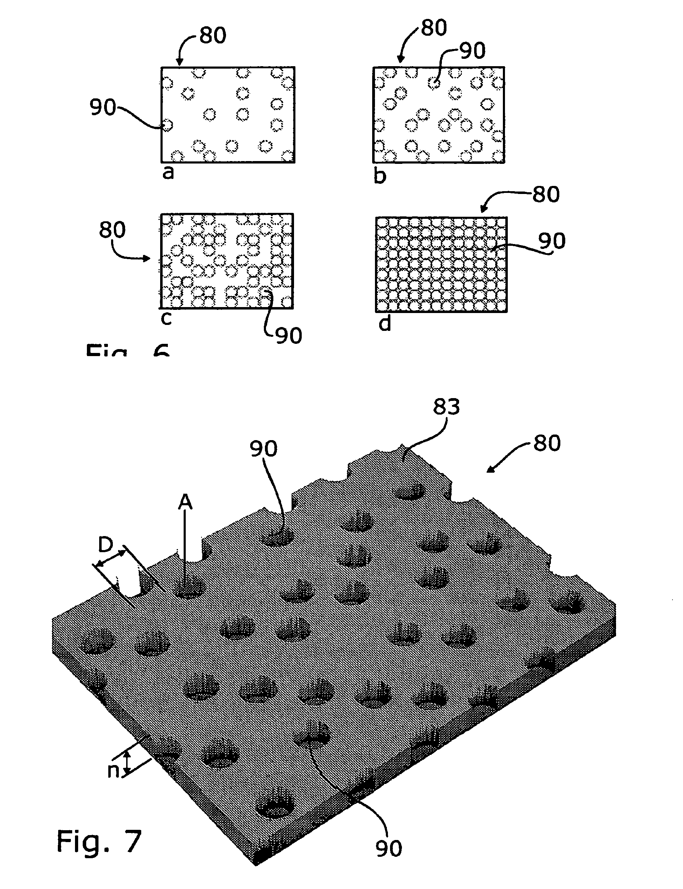

Figur 6 zeigt exemplarisch eine Aufsicht auf die rückseitige Lichtdurchtrittsfläche 83 des Lichtleiters 80 aus Figur 4 in einer alternativen Ausgestaltung. Wie aus Figur 6d ersichtlich ist, handelt es sich hier um eine regelmäßige Anordnung der Lichtauskoppelstrukturen 90 auf der rückseitigen Lichtdurchtrittsfläche 83 in Form eines quadratischen Gitters. Die Figuren a bis d zeigen nun verschiedene Dichten lichtauskoppelnder Strukturen 90 auf der rückseitigen Lichtdurchtrittsfläche 83, wobei die Lichtauskoppelstrukturen 90 stets auf Gitterpunkten des aus Figur 6 d ersichtlichen quadratischen Gitters angeordnet sind. Dabei sind die lichtauskoppelnden Strukturen 90 jedoch stochastisch auf den Gitterpunkten verteilt, wobei sich gleichzeitig lokal eine voreingestellte Dichte ergibt. So liegt in Figur 6a eine Dichte von ca. 5% vor, d.h. 5% der rückseitigen Lichtdurchtrittsfläche 83 sind von Lichtauskoppelstrukturen 90 bedeckt. In Figur 6b beträgt die Dichte ca. 35%, in Fig. 6c ca. 60 % und in Figur 6d liegt sie beim theoretischen Maximum von etwa 78,5% für ein kubisches 2d-Gitter, auf dem Strukturen 90 mit rundem Querschnitt angeordnet sind.

Figur 7 schließlich zeigt eine elektronenmikroskopische Aufnahme einer rückseitigen uchtdurchtrittsfläche 83 eines erfindungsgemäßen Lichtleiters 80, in der erfindungsgemäße Lichtauskoppelstrukturen 90 stochastisch auf Gitterpunkten eines quadratischen Gitters verteilt sind, wobei eine Dichte von 5% eingestellt wurde. Wie aus Figur 7 ersichtlich ist handelt es sich bei den Lichtauskoppelstrukturen 90 um säulenartige Vertiefungen in der rückseitigen Lichtdurchtrittsfläche 83, die einen runden Querschnitt aufweisen und deren Mantelflächen im Wesentlichen senkrecht zur rückseitigen Lichtdurchtrittsfläche 83 orientiert sind. Der Durchmesser der säulenartigen Lichtauskoppelstrukturen 90 liegt im Bereich von 100 Mikrometern, ihre Tiefe h gemessen von der rückseitigen Lichtdurchtrittsfläche 83 an beträgt etwa 10 Mikrometer. Damit beträgt die Basisfläche A einer gezeigten säulenartigen Lichtauskoppelstruktur 90 etwa 7.850 Quadratmikrometer.

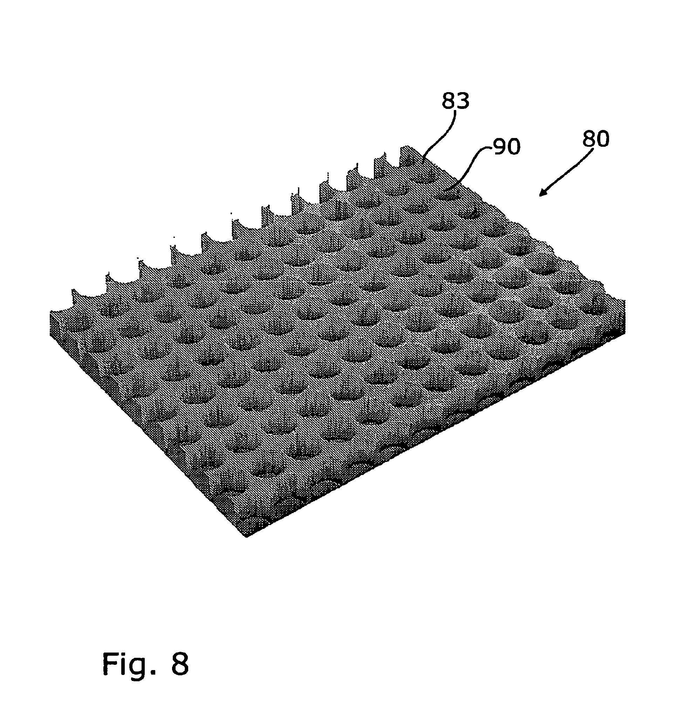

Figur 8 zeigt schließlich die Anordnung äquivalenter Lichtauskoppelstrukturen 90 in der rückseitigen Lichtdurchtrittsfläche 83 eines erfindungsgemäßen Lichtleiters 80, wobei hier die maximale praktisch erzielbare Packungsdichte der als zylindrische Vertiefung ausgebildeten Lichtauskoppelstrukturen 90 bei einer Anordnung auf den Gitterpunkten eines quadratischen Gitters eingestellt wurde. Wie vorstehend bereits erwähnt beträgt die maximal erzielbare theoretische Dichte der Lichtauskoppelstruktur 90 auf der rückseitigen Lichtdurchtrittsfläche 83 etwa 78,5%. Auch in diesem Ausführungsbeispiel weisen die Lichtauskoppelstrukturen 90 einen runden Querschnitt bei einer Tiefe h von etwa 10 Mikrometern auf, der Durchmesser der Strukturen liegt im Bereich von 100 Mikrometern. Die typische minimale Wandstärke zwischen zwei benachbarten Lichtauskoppelstrukturen liegt hier im Bereich von 10 Mikrometern, so dass die Gitterkonstante des quadratischen Gitters bei etwa 110 Mikrometern liegt. Grundsätzlich kann die Wandstärke auch weiter erniedrigt werden, dies ist jedoch mit fertigungstechnischen Schwierigkeiten verbunden. Damit ergibt sich eine Dichte von ca. 55% der Lichtauskoppelstrukturen 90.

Die Transmission des erfindungsgemäßen Lichtleiters 80 kann noch erhöht werden, wenn beispielsweise auf der frontseitigen Lichtdurchtrittsfläche 81 eine reflexionsmindemde Antireflexbeschichtung aufgebracht wird (nicht dargestellt), die beispielsweise aus einem oder mehrlagigen Schichtsystem eines Materials oder mehrerer Materialien mit abweichender Brechungsindices gebildet sein kann. Darüber hinaus ist es auch möglich, eine Antireflexbeschichtung in Form von Mottenaugenstrukturen auf der frontseitigen Lichtdurchtrittsfläche 81 auszubilden, wie beispielsweise in der DE 103 185 66 A1 offenbart. Ein Herstellungsverfahren ergibt sich z.B. aus der DE 100 20 877 A1. Auch hier wird der gesamte Offenbarungsgehalt der in Bezug genommenen Offenlegungsschriften durch diese Bezugnahme zum Offenbarungsgehalt der vorliegenden Anmeldung hinzugefügt.

Auch die rückseitige Lichtdurchtrittsfläche 83, in der die Lichtauskoppelstrukturen 90 ausgebildet sind, lässt sich durch Prägung der vorgenannten Mottenaugenstruktur reflexionsmindernd ausgestalten. Hier muss durch geeignete Verfahrensführung bei der Herstellung des erfindungsgemäßen Lichtleiters 80 sichergestellt werden, dass in dieser rückseitigen Lichtdurchtrittsfläche 83 neben den erfindungsgemäß vorzusehenden Lichtauskoppelstrukturen 90 auch die reflexionsmindernden Mottenaugenstrukturen in die Lichtleiteroberfläche eingeprägt werden. Dies kann beispielsweise geschehen, indem die reflexionsmindernden Mottenaugenstrukturen bereits bei der Herstellung eines Lichtleiterrohlings eingeformt werden. In einem nachfolgenden Herstellungsschritt werden dann in die mit Mottenaugenstrukturen versehene rückseitige Lichtdurchtrittsfläche 83 die erfindungsgemäß vorzusehenden Lichtauskoppelstrukturen 90 eingebracht, beispielsweise mittels eines mechanischen Prägevorgangs, der ggf. mit einer lokalen Erwärmung des Lichtleiters 80 im Bereich seiner rückseitigen Lichtdurchtrittsfläche 83 verbunden sein kann.

Zusätzlich zu einer reflexionsmindernden Beschichtung kann insbesondere die frontseitige Lichtdurchtrittsfläche 81 des erfindungsgemäßen Lichtleiters zusätzlich mit einer die Kratzfestigkeit erhöhenden Beschichtung bzw. mit einer Beschlag vermindernden "Antifog"-Beschichtung versehen werden. Beide sind grundsätzlich aus dem Stand der Technik bekannt, insbesondere für die Oberfläche eines PMMA Lichtleiters bzw. eines Lichtleiters, der aus transparentem Polycarbonat oder transparentem Polyethylen besteht.

Bei Probemessungen mit einer erfindungsgemäßen Lichtleiteranordnung 5, bei der die rückseitige Lichtdurchtrittsfläche 83 des Lichtleiters mit den aus den Figuren 7 und 8 ersichtlichen Lichtauskoppelstrukturen 90 versehen war, die eine Tiefe h von 10 Mikrometern aufwiesen bei einem Durchmesser von 100 Mikrometern, konnten mit einem weiß beschichteten Kennzeichenrohling bzw. einem schwarz beschichten Kennzeichenrohling und einer Dichte von 20 der vorstehend beschriebenen weißen Hochleistungs-LEDs auf einer Länge von 500 mm folgende Leuchtdichten des ausgeleuchteten Kennzeichenrohlings bzw. folgende Kontrastverhältnisse erzielt werden:

| **Strukturdichte** | **Leuchtdichte mit weißem Kennzeichenrohling [cd/m2]** | **Leuchtdichte mit schwarzem Kennzeichenrohling [cd/m2]** | **Kontrastverhältnis (Lmax-Lmin)/ (Lmax+Lmin)** | **Kontrastverhältnis Lmin/Lmax** |
|---|---|---|---|---|
| 10% | 42 | 9 | 0,65 | 0,21 |
| 30% | 76 | 17 | 0,63 | 0,22 |
| 60% | 83 | 23 | 0,57 | 0,28 |
| 100% | 83 | 26 | 0,52 | 0,31 |

Der angegebene Prozentwert der Strukturdichte bezieht sich auf eine quadratische dichteste Kreispackung, d.h. Mantelflächen der Säulen berühren sich entspricht einer Dichte von 100 %.

Hieraus ergibt sich, dass mit den Lichtauskoppelstrukturen 90 der vorbeschriebenen Art bereits bei einer Dichte von nur 10% hervorragende Ergebnisse bezüglich der erzielbaren Leuchtstärke der mit der erfindungsgemäßen Lichtleiteranordnung 5 ausgeleuchteten Kennzeichenlegende erzielt werden können, wobei gleichzeitig die Retroreflexion des retroreflektierenden Kfz-Kennzeichenschilds nur unwesentlich herabgesetzt wurde. Mit einer solchen Lichtleiteranordnung 5 lassen sich somit sowohl die gesetzlichen Vorgaben bezüglich der Ausleuchtung des gehaltenen Kfz-Kennzeichenschilds als auch bezüglich der Retroreflexion des gehaltenen retroreflektierenden Kfz-Kennzeichenschilds sicher erfüllen.

Bei einer Herstellung eines erfindungsgemäß individualisierten Lichtleiters 80 im Spritzgussverfahren können die erfindungsgemäß vorzusehenden Lichtauskoppelstrukturen 90 vorteilhaft bereits beim Spritzgießen des Uchtleiters 80 in diesen eingeformt werden. Hierzu verwendet man vorteilhaft eine Stahlblecheinlage zur Herstellung des Lichtleiters, welche in das verwendete Spritzgusswerkzeug eingefügt wird, und welches eine Matrize für die Einbringung der Lichtauskoppelstrukturen 90 in die rückseitige Lichtdurchtrittsfläche 83 des Lichtleiters 80 darstellt. Hierzu wird das Stahlblech auf der zu strukturierenden Seite hochglanzpoliert und vernickelt. Auf dieses vernickelte Stahlblech werden nachfolgend über ein lithografisches Verfahren säulenartige Strukturen abgeschieden, die komplementär ausgebildet sind zu den Lichtauskoppelstrukturen 90, weiche in dem erfindungsgemäß individualisierten Uchtleiter 80 ausgebildet werden sollen. Diese lithografischen Strukturen werden hierbei vorteilhaft im LIGA-Verfahren hergestellt (LIGA: Lithografie, Galvanik und Abformung), weiches aus dem Stand der Technik wohl bekannt ist. Das fertig strukturierte vernickelte Stahlblech wird dann vorzugsweise mittels geeigneter Befestigungsschrauben in einer Formhälfte des Spritzgusswerkzeugs als Prägematerial festgelegt. Als Träger für die Prägematrize bietet sich Stahlblech insbesondere deswegen an, da es denselben Wärmeausdehnungskoeffizienten wie der Werkzeugstahl der Spritzgussform besitzt. Dies ist relevant, da die Temperaturschwankungen der Werkzeugoberfläche und der Stahlblechmatrize während des Spritzgussprozesses etwa 200° C pro Spritzgusszyklus betragen können.

Abschließend wird allgemein darauf hingewiesen, dass die Lichtleiteranordnung gemäß der vorliegenden Erfindung zwar insbesondere für die Ausleuchtung der Legende eines retroreflektierenden Kfz-Kennzeichenschilds geeignet ist, ihre Verwendung im Rahmen der vorliegenden Erfindung aber nicht auf retroreflektierende Kfz-Kennzeichenschilder beschränkt ist. Vielmehr soll eine Verwendung im Zusammenhang mit beliebig ausgestalteten Kfz-Kennzeichenschildern mit umfasst sein, insbesondere optisch transparenten oder auch nicht transparenten Schildern sowie retroreflektierenden als auch nicht retroreflektierenden Schildern.

## Patentansprüche

1. Beleuchtete, ggf. retroreflektierende Kfz -Kennzeichenschildanordnung (100), die folgenden Merkmale umfassend:
a. ein ggf. retroreflektierendes Kfz -Kennzeichenschild (2) mit einer flächenhaft ausgedehnten Schildplatine,
b. eine Lichtleiteranordnung (5) zur Ausleuchtung des an einem Kfz befestigten Kfz -Kennzeichenschilds (2), mit
i. einem flächenhaft ausgedehnten transparenten Lichtleiter (80) mit einer frontseitigen Lichtdurchtrittsfläche (81) und einer rückseitigen Lichtdurchtrittsfläche (83), und
ii. zumindest einer Lichtquelle (22), deren Licht in den Lichtleiter (80)
1. eingekoppelt und in diesem geführt wird, und
2. zur Ausleuchtung des Kfz - Kennzelchenschilds (2) aus diesem ausgekoppelt wird,
wobei
c. der Lichtleiter (80) der Lichtleiteranordnung (5) folgende Merkmale aufweist:
i. er ist vorderseitig der flächenhaft ausgedehnten Schildplatine für eine Ausleuchtung des Kfz -Kennzeichenschilds (2) angeordnet,
ii. er weist im Bereich einer Lichtdurchtrittsfläche (83) angeordnete Lichtsauskoppelstrukturen (90) auf, wobei die Lichtsauskoppelstrukturen (90) aus einer Mehrzahl vertiefter Säulenstrukturen bestehen, die folgende Merkmale aufweisen:
1. eine Längsachse X, die im Wesentlichen senkrecht zur Lichtdurchtrittsfläche (83) orientiert ist,
2. eine oder mehrere Mantelflächen, die ebenfalls im Wesentlichen senkrecht zur Lichtdurchtrittsfläche (83) orientiert sind, und
iii. diejenige Lichtdurchtrittsfläche (83, 81), in deren Bereich die Lichtauskoppelstrukturen (90) des Lichtleiters (80) angeordnet sind, ist mit einer dünnen, optisch transparenten Beschichtung überschichtet, die Im µm-Bereich eine Glättung der vertieften Lichtauskoppelstrukturen (90) bewirkt.

2. Kennzeichenschildanordnung (100) gemäß Anspruch 1, **dadurch gekennzeichnet, dass** die Höhe oder Tiefe h der Lichtsauskoppelstrukkturen (90) relativ zur Lichtdurchtrittsfläche (83) auf dieser lokal variiert.

3. Kennzeichenschildanordnung (100) gemäß Anspruch 1, **dadurch gekennzeichnet, dass** die Größe A der Basisfläche der Lichtsauskoppelstrukturen (90) auf der Lichtdurchtrittsfläche (83) lokal variiert.

4. Kennzeichenschildenurdnung (100) gemäß Anspruch 1, **dadurch gekennzeichnet dass** die Dichte der Lichtsauskoppeistrukturen (90) auf der Lichtdurchtrittsfläche (83) lokal varilert, wobei die Dichte der Uchtsauskoppelstrukturen (90) auf der Lichtdurchtrittsfläche (83) in dem Bereich am niedrigsten Ist, der an die zumindest eine Lichtquelle (22) angrenzt.

5. Kennzelchenschildanordnung (100) gemäß Anspruch 1, **dadurch gekennzeichnet, dass** die Lichtsauskoppelstrukturen (90) einen entlang ihrer Längsachse X im Wesentilchen konstanten Querschnitt aufweisen.

6. Kennzeichenschildanordnung (100) gemäß Anspruch 1, **dadurch gekennzeichnet, dass** sich der Querschnitt der Lichtsauskoppeistrukturen (90) entlang ihrer Längsachse X verjüngt.

7. Kennzeichenschildanordnung (100) gemäβ Anspruch 1, **dadurch gekennzeichnet, dass** die Lichtsauskoppelstrukturen (90) einen von der Laufrichtung L des im Lichtielter (80) geführten Lichts unabhängigen Lichtauskoppelgrad aufweisen.

8. Kennzeichenschildanordnung (100) gemaß Anspruch 7, **dadurch gekennzeichnet, dass** die Lichtsauskoppeistrukturen (90) eine kreisförmige Basisfläche aufweisen.

9. Kennzeichenschildanordnung (100) gemäß Anspruch 1, **dadurch gekennzeichnet, dass** die Lichtauskoppelstrukturen (90) integral mit dem Lichtleiter (80) ausgebildet sind.

10. Kennzeichenschildanordnung (100) gemäß Anspruch 1, **dadurch gekennzeichnet, dass** die Lichtauskoppelstrukturen (90) einen Anteil von 5 % bis 20% der Oberfläche derjenigen Lichtdurchtrittsfläche (83) überdecken, in deren Bereich sie angeordnet sind.

11. Montagevorrichtung (1) zur Befestigung eines ggf. retroreflektierenden Kfz -Kennzeichenschilds (2) mit einer flächenhaft ausgedehnten Schildplatine an einem Kfz, die folgenden Merkmale umfassend:
a. einen Halter (10), der dazu ausgebildet ist,
i. das Kfz -Kennzeichenschild (2) zu halten, und
ii. an einem Kfz befestigt zu werden, dergestalt dass das vom Halter (10) gehaltene Kfz -Kennzeichenschild (2) mechanisch am Kfz festgelegt wird, und,
b. eine Lichtleiteranordnung (5) zur Ausleuchtung des Kfz - Kennzeichenschilds (2), mit
i. einem flächenhaft ausgedehnten transparenten Lichtleiter (80) mit einer frontseitigen Lichtdurchtrittsfläche (81) und einer rückseitigen Lichtdurchtrittsfläche (83), und
ii. zumindest einer Lichtquelle (22), deren Licht in den Lichtleiter (80)
1. eingekoppelt und in diesem geführt wird, und
2. zur Ausleuchtung des Kfz - Kennzeichenschilds (2) aus diesem ausgekoppelt wird,
wobei
iii. der Lichtleiter (80) der Lichtleiteranordnung (5) folgende Merkmale aufweist:
1. er ist vorderseitig der flächenhaft ausgedehnten Schildplatine für eine Ausleuchtung des Kfz - Kennzeichenschilds (2) angeordnet
2. er weist im Bereich einer Lichtdurchtrittsfläche (83) angeordnete Lichtsauskoppeistrukturen (90) auf, wobei die Lichtsauskoppelstrukturen (90) aus einer Mehrzahl vertietter Saulenstrukturen bestehen, die folgende Merkmale aufweisen:
a. eine Längsachse X, die im Wesentlichen senkrecht zur Lichtdurchtrittsfläche (83) orientiert ist,
b. eine oder mehrere Mantelflächen, die ebenfalls im Wesentlichen senkrecht zur Lichtdurchtrittsfläche (83) orientiert sind, und
3. diejenige Lichtdurchtrittsfläche (83, 81), in deren Bereich die Lichtauskoppelstrukturen (90) des Uchtleiters (80) angeordnet sind, ist mit einer dünnen, optisch transparenten Beschichtung überschichtet, die Im µm-Bereich eine Glättung der vertieften Lichtauskoppelstrukturen (90) bewirkt.

12. Kfz mit einer Kfz - Kennzeichenschildanoldunng gemäß einem der Ansprüch 1-10 oder einer Montage vorrichtung gemäß Ansprüch 11.

## Claims

1. An illuminated, optionally retro-reflecting vehicle number plate assembly (100), comprising the following features:
a. an optionally retro-reflecting vehicle number plate (2) with a two-dimensionally extending plate panel,
b. a light guide assembly (5) for illuminating the vehicle number plate (2) attached to a vehicle, comprising
i. a two-dimensionally extending transparent light guide (80) with a front light transmission surface (81) and a rear light transmission surface (83), and
ii. at least one light source (22) whose light
1. is coupled into and guided in, and,
2. in order to illuminate the vehicle number plate (2), is output-coupled from
the light guide (80),
wherein
c. the light guide (80) of the light guide assembly (5) has the following features:
i. it is disposed frontally of the two-dimensionally extending plate panel for illuminating the vehicle number plate (2),
ii. it comprises light output-coupling structures (90) disposed in the region of a light transmission surface (83), the light output-coupling structures (90) consisting of a plurality of recessed column structures that have the following features:
1. a longitudinal axis X oriented substantially perpendicularly to the light transmission surface (83),
2. one or more jacket surfaces also oriented substantially perpendicularly to the light transmission surface (83), and
iii. that light transmission surface (83, 81) in whose region the light output-coupling structures (90) of the light guide (80) are disposed is overlaid with a thin, optically transparent coating, which, in the µm range, causes a smoothing of the recessed light output-coupling structures (90).

2. A number plate assembly (100) according to claim 1, **characterised in that** the height or depth h of the light output-coupling structures (90) relative to the light transmission surface (83) varies locally on the latter.

3. A number plate assembly (100) according to claim 1, **characterised in that** the size A of the base area of the light output-coupling structures (90) varies locally on the light transmission surface (83).

4. A number plate assembly (100) according to claim 1, **characterised in that** the density of the light output-coupling structures (90) varies locally on the light transmission surface (83), the density of the light output-coupling structures (90) on the light transmission surface (83) being the lowest in the region adjacent to the at least one light source (22).

5. A number plate assembly (100) according to claim 1, **characterised in that** the light output-coupling structures (90) have a cross section that is substantially constant along their longitudinal axis X.

6. A number plate assembly (100) according to claim 1, **characterised in that** the cross section of the light output-coupling structures (90) tapers along their longitudinal axis X.

7. A number plate assembly (100) according to claim 1, **characterised in that** the light output-coupling structures (90) have a light output-coupling level that is independent from the propagation direction L of the light guided in the light guide (80).

8. A number plate assembly (100) according to claim 7, **characterised in that** the light output-coupling structures (90) have a circular base area.

9. A number plate assembly (100) according to claim 1, **characterised in that** the light output-coupling structures (90) are formed integrally with the light guide (80).

10. A number plate assembly (100) according to claim 1, **characterised in that** the light output-coupling structures (90) cover a proportion of 5 % to 20 % of the surface of that light transmission surface (83) in whose region they are disposed.

11. Mounting fixture (1) for attaching an optionally retro-reflecting vehicle number plate (2) with a two-dimensionally extending plate panel to a vehicle, comprising the following features:
a. a bracket (10) configured
i. to hold the vehicle number plate (2), and
ii. to be attached to a vehicle in such a way that the vehicle number plate (2) held by the bracket (10) is mechanically fixed to the vehicle, and,
b. a light guide assembly (5) for illuminating the vehicle number plate (2), comprising
i. a two-dimensionally extending transparent light guide (80) with a front light transmission surface (81) and a rear light transmission surface (83), and
ii. at least one light source (22) whose light
1. is coupled into and guided in, and,
2. in order to illuminate the vehicle number plate (2), is output-coupled from
the light guide (80),
wherein
iii. the light guide (80) of the light guide assembly (5) has the following features:
1. it is disposed frontally of the two-dimensionally extending plate panel for illuminating the vehicle number plate (2),
2. it comprises light output-coupling structures (90) disposed in the region of a light transmission surface (83), the light output-coupling structures (90) consisting of a plurality of recessed column structures that have the following features:
a. a longitudinal axis X oriented substantially perpendicularly to the light transmission surface (83),
b. one or more jacket surfaces also oriented substantially perpendicularly to the light transmission surface (83), and
3. that light transmission surface (83, 81) in whose region the light output-coupling structures (90) of the light guide (80) are disposed is overlaid with a thin, optically transparent coating, which, in the µm range, causes a smoothing of the recessed light output-coupling structures (90).

12. Vehicle comprising a vehicle number plate assembly according to any one of the claims 1 to 10 or a mounting fixture according to claim 11.

## Revendications

1. Ensemble éclairé, le cas échéant rétro-réfléchissant, de plaque d'immatriculation de véhicule automobile (100), comprenant les caractéristiques suivantes :
a. une plaque d'immatriculation de véhicule automobile (2), le cas échéant rétro-réfléchissante, ayant une platine de plaque s'étendant en nappe,
b. un ensemble de guide de lumière (5) destiné à éclairer la plaque d'immatriculation de véhicule automobile (2) fixée sur un véhicule automobile, comprenant
i. un guide de lumière (80) transparent s'étendant en nappe et ayant une surface frontale de passage de lumière (81) ainsi qu'une surface arrière de passage de lumière (83), et
ii. au moins une source de lumière (22) dont la lumière
1. est couplée dans ledit guide de lumière (80) et guidée à l'intérieur de celui-ci et
2. est découplée de celui-ci pour éclairer la plaque d'immatriculation de véhicule automobile (2),
dans lequel
c. ledit guide de lumière (80) de l'ensemble de guide de lumière (5) présente les caractéristiques suivantes :
i. il est disposé sur la face avant de ladite platine de plaque s'étendant en nappe, pour un éclairage de la plaque d'immatriculation de véhicule automobile (2),
ii. il présente des structures de découplage de lumière (90) qui sont disposées au niveau d'une surface de passage de lumière (83), lesdites structures de découplage de lumière (90) se composant d'une pluralité de structures en colonne creusées, présentant les caractéristiques suivantes :
1. un axe longitudinal X qui est orienté pour l'essentiel perpendiculairement à ladite surface de passage de lumière (83),
2. une ou plusieurs surface(s) latérale(s) qui sont orientées, elles aussi, pour l'essentiel perpendiculairement à ladite surface de passage de lumière (83), et
iii. la surface de passage de lumière (83, 81) au niveau de laquelle sont disposées les structures de découplage de lumière (90) du guide de lumière (80) est revêtue d'un mince revêtement optique transparent qui provoque, dans le domaine de µm, un lissage des structures creusées de découplage de lumière (90).

2. Ensemble de plaque d'immatriculation (100) selon la revendication 1, **caractérisé par le fait que** la hauteur ou la profondeur h des structures de découplage de lumière (90) varie localement sur la surface de passage de lumière (83) par rapport à celle-ci.

3. Ensemble de plaque d'immatriculation (100) selon la revendication 1, **caractérisé par le fait que** la taille A de la surface de base des structures de découplage de lumière (90) varie localement sur la surface de passage de lumière (83).

4. Ensemble de plaque d'immatriculation (100) selon la revendication 1, **caractérisé par le fait que** la densité des structures de découplage de lumière (90) varie localement sur la surface de passage de lumière (83), la densité des structures de découplage de lumière (90) sur la surface de passage de lumière (83) est la plus faible dans la zone qui est contiguë à ladite au moins une source de lumière (22).

5. Ensemble de plaque d'immatriculation (100) selon la revendication 1, **caractérisé par le fait que** les structures de découplage de lumière (90) présentent une section transversale pour l'essentiel constante suivant leur axe longitudinal X.

6. Ensemble de plaque d'immatriculation (100) selon la revendication 1, **caractérisé par le fait que** la section transversale des structures de découplage de lumière (90) se rétrécit suivant leur axe longitudinal X.

7. Ensemble de plaque d'immatriculation (100) selon la revendication 1, **caractérisé par le fait que** lesdites structures de découplage de lumière (90) présentent un degré de découplage de lumière qui est indépendant du sens de marche L de la lumière guidée à l'intérieur du guide de lumière (80).

8. Ensemble de plaque d'immatriculation (100) selon la revendication 7, **caractérisé par le fait que** lesdites structures de découplage de lumière (90) présentent une surface de base circulaire.

9. Ensemble de plaque d'immatriculation (100) selon la revendication 1, **caractérisé par le fait que** lesdites structures de découplage de lumière (90) sont réalisées de façon intégrale avec le guide de lumière (80).

10. Ensemble de plaque d'immatriculation (100) selon la revendication 1, **caractérisé par le fait que** lesdites structures de découplage de lumière (90) recouvrent une portion comprise entre 5 % et 20 % de la surface de la surface de passage de lumière (83) dans la zone de laquelle elles sont disposées.

11. Dispositif de montage (1) pour la fixation, sur un véhicule automobile, d'une plaque d'immatriculation de véhicule automobile (2), le cas échéant rétro-réfléchissante, ayant une platine de plaque s'étendant en nappe, comprenant les caractéristiques suivantes :
a. un support (10) qui est agencé pour
i. supporter ladite plaque d'immatriculation de véhicule automobile (2) et
ii. être fixé sur un véhicule automobile de telle sorte que la plaque d'immatriculation de véhicule automobile (2) supportée par ledit support (10) soit fixée mécaniquement sur le véhicule automobile, et
b. un ensemble de guide de lumière (5) destiné à éclairer ladite plaque d'immatriculation de véhicule automobile (2), comprenant
i. un guide de lumière (80) transparent s'étendant en nappe et ayant une surface frontale de passage de lumière (81) ainsi qu'une surface arrière de passage de lumière (83), et
ii. au moins une source de lumière (22) dont la lumière
1. est couplée dans ledit guide de lumière (80) et guidée à l'intérieur de celui-ci et
2. est découplée de celui-ci pour éclairer la plaque d'immatriculation de véhicule automobile (2),
dans lequel
iii. ledit guide de lumière (80) de l'ensemble de guide de lumière (5) présente les caractéristiques suivantes :
1. il est disposé sur la face avant de ladite platine de plaque s'étendant en nappe, pour un éclairage de la plaque d'immatriculation de véhicule automobile (2),
2. il présente des structures de découplage de lumière (90) qui sont disposées au niveau d'une surface de passage de lumière (83), lesdites structures de découplage de lumière (90) se composant d'une pluralité de structures en colonne creusées qui présentent les caractéristiques suivantes :
a. un axe longitudinal X qui est orienté pour l'essentiel perpendiculairement à ladite surface de passage de lumière (83),
b. une ou plusieurs surface(s) latérale(s) qui sont orientées, elles aussi, pour l'essentiel perpendiculairement à ladite surface de passage de lumière (83), et
3. la surface de passage de lumière (83, 81) au niveau de laquelle sont disposées les structures de découplage de lumière (90) du guide de lumière (80) est revêtue d'un mince revêtement optique transparent qui provoque, dans le domaine de µm, un lissage des structures creusées de découplage de lumière (90).

12. Véhicule automobile comprenant un ensemble de plaque d'immatriculation de véhicule automobile selon l'une quelconque des revendications 1 à 10 ou un dispositif de montage selon la revendication 11.
